# EUROPEAN PATENT APPLICATION

(11) **EP 4 848 376 A1**
(43) Date of publication of application: **02.12.2026**
(21) Application number: 25772689.3
(22) Date of filing: 07.01.2025
(51) Int. Cl.: H01M 4/62

(54) **SECONDARY BATTERY, GEL ELECTROLYTE PRECURSOR SOLUTION, PREPARATION METHOD, AND ELECTRIC DEVICE**

(30) Priority: 18.03.2024 CN 202410308690
(71) Applicant: Contemporary Amperex Technology Co., Limited, Ningde, Fujian 352100 (CN)
(72) Inventor: SONG, Shaokang, Ningde, Fujian 352100 (CN); XUE, Wenwen, Ningde, Fujian 352100 (CN); WANG, Xinchuan, Ningde, Fujian 352100 (CN); LIU, Chengyong, Ningde, Fujian 352100 (CN); HE, Xiaoning, Ningde, Fujian 352100 (CN); YI, Bo, Ningde, Fujian 352100 (CN)
(74) Representative: Aera A/S
(86) International application number: PCT/CN2025/071075
(87) International publication number: WO 2025/194979

(57) **Abstract**

The present application relates to a secondary battery, a gel electrolyte precursor solution, a preparation method, and an electric device. The secondary battery comprises a gel electrolyte, wherein the gel electrolyte comprises a first gel electrolyte inside an electrode active material layer and a second gel electrolyte outside an electrode sheet, the first gel electrolyte and the second gel electrolyte each independently comprise a cross-linked polymer, a gelling solvent and an electrolyte salt; the cross-linked polymer comprises a carbon-based chain segment; and the gel electrolyte comprises a polymerization inhibition residue.

## Description

### RELATED APPLICATION

The present application claims priority to Chinese Patent Application No. CN2024103086900 filed on March 18, 2024 and entitled "SECONDARY BATTERY, GEL ELECTROLYTE PRECURSOR SOLUTION, PREPARATION METHOD, AND ELECTRICAL APPARATUS," which is incorporated herein by reference in its entirety.

### TECHNICAL FIELD

The present application relates to the technical field of secondary batteries, and further relates to a secondary battery, a gel electrolyte precursor solution, a preparation method, and an electrical apparatus.

### BACKGROUND

The statements here are provided only as background information related to the present application, and do not necessarily constitute prior art.

With the popularization and development of various electronic products such as smart phones, tablets, smart wearables, electric tools and electric vehicles, etc., the application of secondary batteries has involved all aspects of people's daily lives. How to improve the capacity utilization and cycling performance of secondary batteries is of great significance to improve the performance of secondary batteries.

### SUMMARY OF THE INVENTION

In view of this, according to various embodiments and examples of the present application, the present application provides at least a secondary battery, a gel electrolyte precursor solution, a preparation method, and an electrical apparatus. The secondary battery has excellent capacity utilization and cycling performance.

In a first aspect of the present application, a secondary battery is provided. The secondary battery includes a gel electrolyte including a first gel electrolyte located inside an electrode active material layer and a second gel electrolyte located outside an electrode plate. The first gel electrolyte and the second gel electrolyte each independently includes a crosslinked polymer, a gelling solvent and an electrolyte salt, wherein the crosslinked polymer includes a carbon-based segment; and the gel electrolyte includes a polymerization inhibitor residue.

In some embodiments, a secondary battery is provided, which includes a plurality of electrode plates, where the plurality of electrode plates include positive electrode plates and negative electrode plates; any one of the electrode plates independently includes an electrode active material layer;
the secondary battery includes a gel electrolyte, which includes a first gel electrolyte and a second gel electrolyte, the first gel electrolyte is located inside the electrode active material layer, and the second gel electrolyte is located outside the plurality of electrode plates; wherein the first gel electrolyte and the second gel electrolyte each independently includes a crosslinked polymer, a gelling solvent, and an electrolyte salt;
wherein the crosslinked polymer includes a carbon-based segment; the gel electrolyte includes a polymerization inhibitor residue, which is a substance generated from a polymerization inhibitor following a free radical polymerization inhibition reaction, and the polymerization inhibitor includes a polymerization inhibition group capable of terminating the free radical polymerization reaction.

The secondary battery has a gel electrolyte that is fully distributed within the electrode plates. The gel electrolyte can be formed by infiltrating the electrode plates with a gel electrolyte precursor solution containing a polymerization inhibitor, performing formation, and then conducting curing. At this time, polymerization inhibitor residues may exist in the secondary battery. By utilizing the polymerization inhibition effect of the polymerization inhibitor, the curing reaction can be inhibited during the infiltrating and formation stages of the electrode plates, thereby controlling the occurrence time of the curing reaction. This can improve the infiltration effect of the gel electrolyte precursor solution on the interior of the electrode plate, promoting the full distribution of the gel electrolyte precursor solution inside the electrode plate. It also facilitates the full contact and infiltrating between the precursor solution and the electrode active particles, and promotes the full contact between the cured gel electrolyte and the electrode active materials inside the electrode plate, thereby optimizing the transport channels of active ions, and thus promoting the capacity utilization of the positive electrode plate, the negative electrode plate, and the battery cell. Furthermore, it helps to suppress the lithium plating problem at the negative electrode interface and improve the cycling performance of the battery.

In some embodiments, a mass fraction of the polymerization inhibitor residue in the gel electrolyte is 50 ppm-2,000 ppm, and optically 500 ppm-1,000 ppm.

The content of the polymerization inhibitor residue in the gel electrolyte is mainly related to the amount of the polymerization inhibitor used in the preparation process. By controlling the mass fraction of the polymerization inhibitor residue in the gel electrolyte within the aforementioned range, it is beneficial to better control the start time of the curing reaction, obtain a better infiltrating effect, promote more full distribution of the gel electrolyte inside the electrode plate, facilitate the rapid transport of active ions inside the electrode plate, and achieve better capacity utilization and cycling performance.

In some embodiments, the polymerization inhibitor residue includes a quinone residue of a phenolic polymerization inhibitor; wherein the phenolic polymerization inhibitor includes an aromatic ring and a phenolic hydroxyl group directly bonded to the aromatic ring; and in one molecule of the phenolic polymerization inhibitor, the polymerization inhibition group includes one or more phenolic hydroxyl groups.

In some embodiments, the phenolic polymerization inhibitor includes one or more of the following compounds: one or more of phenol, 2,6-di-tert-butylphenol, p-methoxyphenol, 2,6-di-tert-butyl-4-methylphenol, hydroquinone, catechol, 2-nitrohydroquinone, monomethyl hydroquinone, trimethyl hydroquinone, p-tert-butylcatechol, 2,5-di-tert-butylhydroquinone, bisphenol A, 4,4'-dihydroxybiphenyl, 4,4'-butylidene bis(6-tert-butyl-3-methylphenol), benzenetriol and 4-bromophenol.

The phenolic polymerization inhibitor is a kind of free radical polymerization inhibitor that has a wide range of polymerization inhibition effects on various free radical polymeric monomers. It has a good polymerization inhibition effect on polymeric monomers such as acrylates and styrenes, and can quench free radicals generated by the decomposition of the initiator.

In some embodiments, the crosslinked polymer includes repeating units formed by free radical polymerization of polymeric monomers; the polymeric monomer includes a polyene compound, and also includes or does not include a monoene compound, wherein the polyene compound has multiple polymerizable carbon-carbon double bonds, and the monoene compound has one polymerizable carbon-carbon double bond;
optionally, the polyene compound includes one or more of ethylene glycol diacrylate, ethylene glycol dimethacrylate, polyethylene glycol diacrylate, polyethylene glycol dimethacrylate, 1,4-butanediol dimethacrylate, 1,6-hexanediol dimethacrylate, 1,4-butanediol diacrylate, glyceryl dimethacrylate, dimethyl 1,2-propylene glycol acrylate, 1,3-butanediol dimethacrylate, dipropylene glycol diacrylate, trimethylolpropane trimethylacrylate, trimethylolpropane triacrylate, glyceryl trimethylacrylate, triallyl trimesate, cyclohexanetriol trimethylacrylate, pentaerythritol triacrylate, pentaerythritol tetraacrylate and pentaerythritol tetramethylacrylate.

Different types of polymeric monomers can be flexibly selected according to the structural requirements of the crosslinked polymer in the gel electrolyte. The polymeric monomer includes a polyene compound, and the crosslinked polymer has a network crosslinked structure, so that the gel electrolyte has both the solidity of a gel skeleton and the confined flow phase of the gelling solvent in terms of physical morphology. By introducing the monoene compound, the distance between adjacent crosslinking degrees in the network crosslinked structure can be adjusted, thereby modifying the flexibility of the gel electrolyte.

In some embodiments, an electrode active material layer in the positive electrode plate is denoted as a positive electrode active material layer, and an electrode active material layer in the negative electrode plate is denoted as a negative electrode active material layer;
the volume of the gel electrolyte in the positive electrode active material layer is denoted as V_{P1}, and the volume and porosity of the positive electrode active material layer are denoted as V_{P2} and φ_{P} respectively; so as to define α_{P} = V_{P1} / (V_{P2} × φ_{P});
the volume of the gel electrolyte in the negative electrode active material layer is denoted as V_{N1}, and the volume and porosity of the negative electrode active material layer are denoted as V_{N2} and φ_{N2} respectively; so as to define α_{N} = V_{N1} / (V_{N2} × φ_{N});
wherein α_{P} and α_{N} are each independently greater than or equal to 0.85; and
optionally, α_{P} and α_{N} are each independently greater than or equal to 0.9.

In some embodiments, the secondary battery includes a separator located between the positive electrode plate and the negative electrode plate, and the positive electrode plate, the negative electrode plate and the separator form an electrode assembly;
the α_{P} of the positive electrode active material layer located at the innermost side of the electrode assembly is denoted as α_{P0}, and the α_{N} of the negative electrode active material layer located at the innermost side of the electrode assembly is denoted as α_{N0};
wherein α_{P0} and α_{N0} are each independently greater than or equal to 0.85; and
optionally, α_{P0} and α_{N0} are each independently greater than or equal to 0.9.

The extent to which the gel electrolyte is distributed within the electrode plate can be reflected by the filling coefficients α_{P} and α_{N}. When the α_{P} and the α_{N} are higher, the gel electrolyte is distributed within the electrode plate more fully, and the degree of contact with the electrode active material is higher.

For the electrode assembly, the further away from the outer surface of the electrode assembly or the closer to the innermost side of the electrode assembly, the more difficult it is for the gel electrolyte precursor solution to infiltrate the electrode plate. Therefore, the higher the filling coefficients α_{P0} and α_{N0} at the innermost side of the electrode assembly, the more fully the gel electrolyte is distributed inside the electrode plate in the secondary battery.

In a second aspect of the present application, a gel electrolyte precursor solution is provided, which includes the following components: a free radical polymerization system, a polymerization inhibitor, an electrolyte salt and an electrolyte solvent;
wherein the free radical polymerization system includes a polymeric monomer and an initiator, wherein the initiator is capable of initiating a free radical polymerization reaction of the polymeric monomer to form a crosslinked polymer; and the polymerization inhibitor includes a polymerization inhibition group capable of terminating the free radical polymerization reaction of the free radical polymerization system.

The aforementioned secondary battery including the gel electrolyte can be formed by infiltrating the electrode plate with the gel electrolyte precursor solution provided in the second aspect of the present application, performing formation, and curing.

In some embodiments, the gel electrolyte precursor solution satisfies one or more of the following features:
a mass percentage of the polymeric monomer in the gel electrolyte precursor solution is 2%-15%, and optionally 8%-12%; and
a mass fraction of the polymerization inhibitor in the gel electrolyte precursor solution is 50 ppm-2,000 ppm, and optionally 500 ppm-1,000 ppm.

By adjusting the mass percentage of the polymeric monomer in the gel electrolyte precursor solution within the aforementioned range, it is beneficial to provide a more stable gelling structure while also taking into account the ability to transport active ions.

Adjusting the mass fraction of the polymerization inhibitor in the gel electrolyte precursor solution helps to provide a sufficient polymerization inhibition effect while reducing the added amount as much as possible.

In some embodiments, the polymerization inhibitor includes a phenolic polymerization inhibitor; wherein the phenolic polymerization inhibitor includes an aromatic ring and a phenolic hydroxyl group directly bonded to the aromatic ring; and in one molecule of the phenolic polymerization inhibitor, the polymerization inhibition group includes one or more phenolic hydroxyl groups.

In some embodiments, the phenolic polymerization inhibitor satisfies one or more of the following features:
in one molecule, the phenolic polymerization inhibitor contains 1-5 phenolic hydroxyl groups;
in one molecule, the phenolic hydroxyl group accounts for 7.5%-40.5% by mass in the phenolic polymerization inhibitor;
in one molecule, the phenolic polymerization inhibitor contains one or more aromatic rings; when there are multiple aromatic rings, adjacent aromatic rings are connected by a chemical bond or -C(R₁R₂)-, wherein R₁ and R₂ are each independently H or C₁₋₄ alkyl; and
the molecular weight of the phenolic polymerization inhibitor is less than or equal to 1,000 Da.

In some embodiments, the phenolic polymerization inhibitor satisfies one or more of the following features:
in one molecule, the phenolic polymerization inhibitor contains 1, 2 or 3 phenolic hydroxyl groups;
in one molecule, the phenolic hydroxyl group accounts for 8%-35% by mass in the phenolic polymerization inhibitor;
in one molecule, the phenolic polymerization inhibitor contains 1 or 2 aromatic rings; when there are multiple aromatic rings, adjacent aromatic rings are connected by a chemical bond or - C(R₁R₂)-, wherein R₁ and R₂ are each independently H or C₁₋₃ alkyl; and -C(R₁R₂)- has 1-4 carbon atoms; and
the molecular weight of the phenolic polymerization inhibitor is less than or equal to 500 Da.

By controlling one or both of the parameters-the number of phenolic hydroxyl groups in the phenolic polymerization inhibitor and the mass proportion of phenolic hydroxyl groups in the phenolic polymerization inhibitor-within the aforementioned range, the polymerization inhibition time and efficiency can be adjusted, and a more sufficient polymerization inhibition effect can be achieved with a more suitable dosage of the phenolic polymerization inhibitor.

The number of sites for introducing phenolic hydroxyl groups can be adjusted by controlling the number of aromatic rings.

By controlling the molecular weight of the phenolic polymerization inhibitor within the aforementioned range, it is beneficial to reduce a steric hindrance effect, thereby making it more conducive to the polymerization inhibition effect of the polymerization inhibition groups.

In some embodiments, any aromatic ring in the phenolic polymerization inhibitor is independently connected with 0, 1 or more non-hydroxyl substituents selected from the group consisting of halogen, nitro, C₁₋₄ alkyl and C₁₋₃ alkoxy.

In some embodiments, any aromatic ring in the phenolic polymerization inhibitor is independently connected with 0, 1 or more non-hydroxyl substituents selected from the group consisting of halogen and nitro; wherein the halogen is selected from one or more of fluorine, chlorine and bromine.

In some embodiments, the phenolic polymerization inhibitor includes one or more of the following compounds: one or more of phenol, 2,6-di-tert-butylphenol, p-methoxyphenol, 2,6-di-tert-butyl-4-methylphenol, hydroquinone, catechol, 2-nitrohydroquinone, monomethyl hydroquinone, trimethyl hydroquinone, p-tert-butylcatechol, 2,5-di-tert-butylhydroquinone, bisphenol A, 4,4'-dihydroxybiphenyl, 4,4'-butylidene bis(6-tert-butyl-3-methylphenol), benzenetriol and 4-bromophenol.

In some embodiments, the gel electrolyte precursor solution satisfies one or more of the following features:
a mass ratio of the initiator to the polymeric monomer is 0.5%-10%, and optionally 0.5%-5%;
a mass ratio of the polymerization inhibitor to the initiator is 0.1%-50%, and optionally 0.1%-20%; and
a mass ratio of the polymerization inhibition group in the polymerization inhibitor to the initiator is 0.01%-15%, and optionally 0.05%-5%.

By controlling the mass ratio of the initiator to the polymeric monomer within the aforementioned range, it is beneficial to make the polymeric monomer fully react and participate in the gelling structure more fully.

By controlling one or both of the parameters-the mass ratio of the polymerization inhibitor to the initiator and the mass ratio of the polymerization inhibition group in the polymerization inhibitor to the initiator-within the aforementioned ranges, the polymerization inhibition effect of the polymerization inhibitor can be fully achieved before the curing reaction starts (including in the infiltrating and formation stages). It is also beneficial to control the introduced amount of byproducts and to fully utilize the initiation effect of the initiator. The polymerization inhibitor can be consumed as soon as possible during the curing reaction stage, thereby starting the curing reaction as soon as possible. It is also beneficial to reduce or avoid the residue of the polymeric monomer, thereby reducing the adverse effects on the electrochemistry of the battery as caused by the reaction of the residual monomer with the electrode.

In some embodiments, the gel electrolyte precursor solution satisfies one or more of the following features:
the polymeric monomer includes a polyene compound, and also include or does not include a monoene compound, wherein the polyene compound has multiple polymerizable carbon-carbon double bonds, and the monoene compound has one polymerizable carbon-carbon double bond; and
the initiator includes one or more of an azo initiator and a peroxide initiator.

In some embodiments, the gel electrolyte precursor solution satisfies one or more of the following features:
the polyene compound has a structure of [CH₂=C(R₀₁)-]ₖU₁, wherein k is an integer greater than or equal to 2, and U₁ is a k-valent non-aromatic group or a k-valent aromatic group; and R₀₁ is independently H or methyl at each occurrence;
the polymeric monomer includes a monoene compound, which includes one or more of CH₂=C(R₀)-R_{A}, 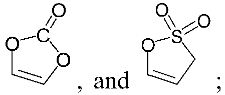 R₀ is H or methyl; R_{A} is -COOH, -C(=O)-O-R₃, -CH(-OR₄₁)(-OR₄₂), cyano, or phenyl; R₃ is C₁₋₆ alkyl, substituted C₁₋₆ alkyl, tri(C₁₋₆ hydrocarbyl)silyl, or tris(C₁₋₆ hydrocarbyloxy)silyl; R₄₁and R₄₂ are each independently C₁₋₃ alkyl; the C₁₋₆ alkyl in the substituted C₁₋₆ alkyl is substituted by one or more substituents selected from the group consisting of -OH, a halo group, epoxy, and cyano;
the initiator includes an azo initiator, and the azo initiator includes one or more of azodiisobutyronitrile, dimethyl azobisisobutyrate and azodiisoheptylnitrile;
the initiator includes a peroxide initiator, which includes one or more of didodecanoyl peroxide, dibenzoyl peroxide, bis(2,4-dichlorobenzoyl) peroxide, diacetyl peroxide, dioctanoyl peroxide, dilauroyl peroxide, peroxydicarbonate, diisopropyl peroxydicarbonate, diisobutyl peroxydicarbonate, dicyclohexyl peroxydicarbonate, and bis(p-tert-butylcyclohexyl) peroxydicarbonate.

In some embodiments, the U₁ has a structure of (-C(=O)-O-)ₖU₀ or (-O-)ₖU₀ or a k-valent aryl; wherein U₀ is connected to an adjacent oxygen atom via a carbon atom, and U₀ is a k-valent alkyl or a k-valent alkyl containing one or more ether groups.

In some embodiments, the polymeric monomer satisfies one or more of the following features:
the polyene compound includes one or more of ethylene glycol diacrylate, ethylene glycol dimethacrylate, polyethylene glycol diacrylate, polyethylene glycol dimethacrylate, 1,4-butanediol dimethacrylate, 1,6-hexanediol dimethacrylate, 1,4-butanediol diacrylate, glyceryl dimethacrylate, dimethyl 1,2-propylene glycol acrylate, 1,3-butanediol dimethacrylate, dipropylene glycol diacrylate, trimethylolpropane trimethylacrylate, trimethylolpropane triacrylate, glyceryl trimethylacrylate, triallyl trimesate, cyclohexanetriol trimethylacrylate, pentaerythritol triacrylate, pentaerythritol tetraacrylate and pentaerythritol tetramethylacrylate;
the monoene compound includes one or more of styrene, vinylene carbonate, vinyl ethylene carbonate, methyl methacrylate, methyl acrylate, ethyl acrylate, acrylic acid, trimethylsilyl methacrylate, acrolein dimethyl acetal, acrolein diethyl acetal, 2-phenoxyethyl acrylate, 3-perfluorohexyl-2-hydroxypropyl acrylate, trifluoroethyl acrylate, trifluoroethyl methacrylate, acryl-1,3-sulfolactone, glycidyl methacrylate, acrylamide, (acryloyloxymethyl)dimethyl methoxysilane, cyanoethyl acrylate, hydroxyethyl acrylate, hydroxypropyl acrylate, 3-(perfluoro-3-methylbutyl) 2-hydroxypropyl acrylate, pentafluorophenol acrylate and acrylonitrile; and
the polymeric monomer is an ester compound, and any ester structure in the ester compound is independently methyl ester, ethyl ester, propyl ester, trifluoroethyl ester, trimethylsilyl ester, 2-phenoxyethyl ester, glycidyl ester, cyanoethyl ester, hydroxyethyl ester, hydroxypropyl ester or pentafluorophenol ester.

In some embodiments, at 45°C, the polymerization inhibitor inhibits the polymerization of the free radical polymerization system for a time of greater than or equal to 1,200 min; and
at 70°C, the initiator is capable of initiating the free radical polymerization of the free radical polymerization system within 600 min.

In a third aspect of the present application, a method for preparing a secondary battery is provided, including the steps of:
providing an electrode assembly located inside a case, wherein the electrode assembly includes a plurality of electrode plates and a separator, wherein the plurality of electrode plates include a positive electrode plate and a negative electrode plate, and the positive electrode plate and the negative electrode plate are isolated by the separator; and any one of the electrode plates independently includes an electrode active material layer;
injecting the gel electrolyte precursor solution of the second aspect of the present application into the case, and keeping the temperature at an infiltration temperature T1 to allow the gel electrolyte precursor solution to infiltrate the plurality of electrode plates;
performing formation at a formation temperature T2; and
subjecting the gel electrolyte precursor solution to a free radical polymerization reaction at a curing temperature T3 to generate a gel electrolyte, and preparing the secondary battery; wherein the gel electrolyte includes a first gel electrolyte located inside the electrode active material layer and a second gel electrolyte located outside the plurality of electrode plates, and the first gel electrolyte and the second gel electrolyte each independently includes a crosslinked polymer formed by the polymeric monomer, a gelling solvent, and at least a part of the electrolyte salt, and the gelling solvent includes at least a part of the electrolyte solvent.

By utilizing the polymerization inhibition effect of the polymerization inhibitor contained in the gel electrolyte precursor solution, the curing reaction can be inhibited during the infiltrating and formation stages of the electrode plates, thereby controlling the occurrence time of the curing reaction. This can improve the infiltration effect of the gel electrolyte precursor solution on the interior of the electrode plate, promoting the full distribution of the gel electrolyte precursor solution inside the electrode plate. It also facilitates the full contact and infiltrating between the precursor solution and the electrode active particles, and optimizes the transport channels of active ions, thereby promoting the capacity utilization of the positive electrode plate, the negative electrode plate, and the battery cell. Furthermore, it helps to suppress the lithium plating problem at the negative electrode interface and improve the cycling performance of the battery.

In some embodiments, the method for preparing a secondary battery satisfies one or more of the following features:
the electrolyte salt in the gel electrolyte precursor solution includes an electrolyte lithium salt;
the curing temperature T3 is higher than the infiltration temperature T1;
the curing temperature T3 is higher than the formation temperature T2;
the infiltration temperature T1 is 10°C-60°C;
the formation temperature T2 is 40°C-60°C;
the curing temperature T3 is 50°C-80°C;
in the step of keeping the temperature at an infiltration temperature T1 to allow the gel electrolyte precursor solution to infiltrate the plurality of electrode plates, a holding time is 24 h-48 h;
in the step of subjecting the gel electrolyte precursor solution to a free radical polymerization reaction at a curing temperature T3 to generate a gel electrolyte, a reaction time of the free radical polymerization reaction is 3 h-8 h; and
preparing to obtain the secondary battery of the first aspect of the present application.

In a further aspect of the present application, a secondary battery is provided, which is the secondary battery according to the first aspect of the present application, or a secondary battery prepared by the method for preparing a secondary battery according to the third aspect of the present application, wherein the secondary battery is a lithium-ion secondary battery.

In a fourth aspect of the present application, an electrical apparatus is provided, which includes at least one of the secondary battery according to the first aspect of the present application and the secondary battery prepared by the method for preparing a secondary battery according to the third aspect of the present application.

Details of one or more embodiments or examples of the present application are presented in the following accompanying drawings and description. Other features, objectives, and advantages of the present application will become apparent from the specification, accompanying drawings, and claims.

### BRIEF DESCRIPTION OF THE DRAWINGS

In order to better describe and illustrate the embodiments, examples, or illustration provided in the present application, one or more accompanying drawings may be referred to. Additional details or examples used for describing the accompanying drawings should not be considered as limiting the scope of the disclosed application, the currently described implementation embodiments, examples, or illustration, or any of the best modes currently understood for the present application. Moreover, in all of the drawings, the same components are indicated by the same reference numerals. In the drawings:
FIG. 1 is a schematic diagram of a battery cell according to an embodiment of the present application.
FIG. 2 is an exploded view of the battery cell in an embodiment of the present application as shown in FIG. 1.
FIG. 3 is a schematic diagram of a battery module in an embodiment of the present application.
FIG. 4 is a schematic diagram of a battery pack in an embodiment of the present application.
FIG. 5 is an exploded view of the battery pack in an embodiment of the present application shown in FIG. 4.
FIG. 6 is a schematic diagram of an electrical apparatus in which a secondary battery is used as a power source in an embodiment of the present application.

### Description of reference numerals:

1. battery pack; 2. upper box; 3. lower box; 4. battery module; 5. battery cell; 51. case; 52. electrode assembly; 53. cover plate; and 6. electrical apparatus.

### DETAILED DESCRIPTION

Hereinafter, some embodiments and examples of a secondary battery, a gel electrolyte precursor solution, a preparation method and an electrical apparatus of the present application are described in detail with appropriate reference to the accompanying drawings. However, unnecessary detailed explanations may be omitted. For example, there are cases where detailed descriptions of well-known items and repeated descriptions of actually identical structures are omitted. This is to prevent the following description from becoming unnecessarily lengthy and to facilitate the understanding of those skilled in the art. In addition, the drawings and subsequent descriptions are provided for those skilled in the art to fully understand the present application, and are not intended to limit the subject matter recited in the claims.

In the present application, the "range" can be defined in a form of a lower limit and an upper limit, and a given range is defined by selecting a lower limit and an upper limit, which define the boundaries of a particular range. A range defined in this way may be inclusive or exclusive of end values, any one of which may be independently included or excluded, and may be combined in any way, that is, any lower limit may be combined with any upper limit to form a range. For example, if the ranges 60-120 and 80-110 are listed for specific parameters, it is understood that the ranges 60-110 and 80-120 are also expected. Moreover, if the minimum range values 1 and 2 are listed, and if the maximum range values 3, 4 and 5 are also listed, the following ranges can be all expected: 1-3, 1-4, 1-5, 2-3, 2-4 and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is just an abbreviated representation of these numerical combinations. In addition, when a parameter is expressed to be an integer ≥ 2, it is equivalent to listing that the parameter is an integer 2, 3, 4, 5, 6, 7, 8, 9, 10, 11, 12, etc. For example, if a certain parameter is an integer selected from "2-10", it corresponds to listing the integers 2, 3, 4, 5, 6, 7, 8, 9, and 10.

In the present application, unless otherwise specified, "about" indicates a reasonable range of fluctuation around the given number, and the fluctuation range may vary depending on the type and magnitude of the number. For example, it may be within a magnitude range of ±10%, ±5%, ±2%, ±1%, etc. For example, by taking "about 20°C" with a tolerance of ±1°C as an example, tolerance values such as 19°C or 19.5°C within the tolerance range shown as "about 20°C" should also be included in the scope indicated by "about 20°C". For example, when "about 500 Da" means ±10 Da, the corresponding fluctuation range is also included in the range of "about 500 Da".

In the present application, unless otherwise specified, when "numerical value" is referred, its meaning includes the number itself and a reasonable tolerance thereof. The definition of the "numerical value" can be applied to discrete numerical points or to the endpoints of a numerical range. In the present application, whenever a numerical value or range of numerical values is referred, unless otherwise specified, it should be understood that the numerical value covers a reasonable tolerance thereof, and the range of numerical values covers the reasonable tolerance of the two endpoints. A person skilled in the art will understand that the acceptable fluctuation range of the relevant tolerance can be included in the definition of the numerical value or the range of numerical values. In the present application, unless otherwise specified, "N1" can be reasonably understood as "about N1", and "N1-N2" can be reasonably understood as "about N1 to about N2", where N1 and N2 are two unequal numerical values. For example, in some cases, due to one or more factors such as reasonable deviations allowed in the art, instrument control accuracy, etc., it is reasonable to include tolerance values within the tolerance range into the range defined by the range of numerical values; for example, "temperature is 20°C-30°C" can be understood as "about 20°C to about 30°C"; further, taking "20°C" as the endpoint and its tolerance of ±1°C as an example, the tolerance values of 19°C, 19.5°C, etc., within the tolerance range corresponding to "about 20°C" should also be included in the range indicated by 20°C-30°C. As a non-restrictive example, the percentage content "10%" can be reasonably understood as "about 10%". As another non-restrictive example, the percentage content "2%-10%" can be reasonably understood as "about 2% to about 10%". As another non-limiting example, the percentage content of "0%" at least includes "none", and may also include cases of "below the detection limit".

In the present application, terms such as "multiple", "various", "several", and "a number of", unless specifically limited, refer to quantities greater than or equal to 2. For example, "one or more" means one or ≥ (more than or equal to) two. It is to be understood that in a case of referring to "any number of" items, it refers to a combination of any suitable number of items, that is, a combination of "any number of" items in a manner that does not conflict and can be implemented according to the present application.

Unless otherwise specified, all embodiments of the present application and optional embodiments may be combined with each other to form a new technical solution.

Reference herein to an "embodiment" means that a particular feature, structure, or property described with reference to the embodiment may be included in at least one example or embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments. The "embodiment" mentioned herein is understood similarly.

Those skilled in the art can understand that in the methods of various embodiments or examples, the order in which the steps are written does not imply a strict execution sequence nor impose any limitation on the implementation process, and the detailed order of execution of each step should be determined according to its function and possible inherent logic. Unless otherwise specified, all steps of the present application can be performed sequentially or randomly, with a preference for sequential performance. For example, a method M includes steps (a) and (b), indicating that the method may include steps (a) and (b) performed sequentially, or steps (b) and (a) performed sequentially. For example, the method M may also include step (c), indicating that step (c) can be added to method M in any order, for example, the method M may include steps (a), (b), and (c), or steps (a), (c), and (b), or steps (c), (a), and (b), and so on.

In the present application, for open-ended technical features or technical solutions described with words such as "has/have", "contain", or "include", unless otherwise specified, the inclusion of additional members beyond those listed is not excluded. They can be considered as providing a closed feature or solution composed of the listed members, as well as an open-ended feature or solution that includes additional members beyond those listed. For example, if A includes a1, a2, and a3, unless otherwise specified, it may also include other members or may not include additional members. This can be considered as providing both the feature and solution in which "A consists of a1, a2, and a3" or "A is selected from a1, a2, and a3", as well as the feature or solution in which "A includes not only a1, a2, and a3, but also other members".

In the present application, unless otherwise stated, A (such as B) means that B is a non-limiting example of A and it is to be understood that A is not limited to B.

In the present application, the "optionally" and "optional" refers to dispensability, that is, they refer to any one selected from two parallel solutions of "presence" or "absence." If there are a plurality of instances of "optional" in one technical solution, unless otherwise specified, and there are no contradictions or interdependencies, each "optional" is independent. Unless otherwise stated, in the present application, descriptions such as "optionally include" or "optionally contain", taking "optionally include" as an example, it means "may include or may not include".

In the present application, unless otherwise stated, features or solutions corresponding the term "and/or" include any one of the two or more listed relevant items, as well as any and all combinations of the listed relevant items, where any and all combinations include any two of the listed relevant items, any more of the listed relevant items, or combinations of all the listed relevant items. For example, "A and/or B" represents the groups consisting of A, B, and "the combination of A and B". In which, "containing A and/or B" can mean "containing A, containing B, and containing both A and B," or it can mean "containing A, containing B, or containing both A and B," which should be understood appropriately according to the context.

The terms "its combination," "any combination thereof," and "any manner of combination thereof" here include all appropriate combinations of any two or more of the listed items.

Here, the terms "suitable combination mode," "suitable mode," and "any suitable mode" use "suitable" based on enabling the implementation of the technical solutions of the present application.

Here, the terms such as "preferred", "preferable", "more preferable", "appropriate", "optimal", and "more optimal" are only used for describing embodiments or examples with better effects, and should be understood as not limiting the scope of protection of the present application. If a technical solution contains a plurality of instances of "preferred", unless otherwise specified, and provided there are no contradictions or mutual restrictions, each "preferred" should be considered independently.

In the present application, terms such as "further", "still further", "particular", "for example", "such as", "example", and "illustration" are used for describing purposes and indicate differences in content, but should not be understood as limiting the scope of protection of the present application.

In the present application, the terms such as "first", "second", "third", and "fourth" in the phrases such as "first aspect", "second aspect", "third aspect", and "fourth aspect" are used only for descriptive purposes, and can neither be construed as indicating or implying a relative importance or number, nor be construed as implicitly indicating the importance or number of indicated technical features. Moreover, the "first," "second," "third," "fourth," etc. only serve the purpose of non-exhaustive enumeration and description, and should be understood as that they do not constitute a closed limitation to the quantity.

In the present application, unless explicitly stated and defined otherwise, the first characteristic being "on" or "under" the second characteristic may mean that the first and second characteristics are in direct contact, or that the first and second characteristics are in indirect contact through an intermediate medium. In the present application, unless explicitly stated otherwise, the first characteristic being "on" or "under" the second characteristic can indicate a relative position relationship in terms of horizontal height, or it can merely indicate the existence of an attachment relationship without limiting the relative position in terms of horizontal height.

In the present application, the term "room temperature" generally refers to 4°C-35°C, and may refer to 20°C ± 5°C. In some embodiments or examples of the present application, room temperature refers to 20°C-30°C.

In the present application, for units related to the data range, if a unit is only indicated after the right endpoint, it means that the units for both the left and right endpoints are the same. For example, 3 to 5 h or 3-5 h indicates that the units for the left endpoint "3" and the right endpoint "5" are both hours (h), and they both have the same meaning as 3 h-5 h. Similarly, other parameters such as temperature and size should be understood in the same way.

The weight or mass of relevant ingredients in the embodiments or examples in the present application can refer not only to the content of each component but also to the proportional relationship of the weight or mass among the components. Therefore, as long as the content of the relevant components in the embodiments or examples in the present application is scaled up or down proportionally, it is within the scope described in the present application. Further, the mass involved in the embodiments or examples of the present application can be in micrograms (µg), milligrams (mg), grams (g), kilograms (kg), or the like mass units commonly known in the chemical industry. Unless otherwise specified, the mass ratio is equal to the corresponding weight proportion. For example, if the mass of substance A is m1 and its weight is W1, and the mass of substance B is m2 and its weight is W2, the mass ratio m1/m2 is numerically equal to the corresponding weight proportion W1/W2.

In the present application, unless otherwise stated, wt% refers to the weight percentage by weight, which is numerically equal to the corresponding mass percentage by mass. In the present application, for weight percentages, recording as "0" has the same meaning as "0 wt%" and can be used interchangeably.

In the present application, "greater than or equal to" and "≥" have the same meaning and can be used interchangeably; "less than or equal to" and "≤" have the same meaning and can be used interchangeably; and "greater than" can equivalently be expressed as ">", and "less than" can equivalently be expressed as "<". In the present application, unless otherwise specified, "greater than or equal to" and "≥" can be considered to also provide the two options of "greater than" and "equal to". In the present application, unless otherwise specified, "less than or equal to" and "≤" can be considered to also provide the two options of "less than" and "equal to".

In the present application, the exemplary descriptions such as "in some embodiments (or examples)" or "in one embodiment (or example)" may encompass, but are not limited to, the following meanings: these solutions can be combined with other solutions in an appropriate manner to form new technical solutions.

In the present application, unless otherwise specified, the term "alkyl" refers to a monovalent residue formed by the loss of one hydrogen atom from saturated hydrocarbon containing a primary (normal) carbon atom, or a secondary carbon atom, or a tertiary carbon atom, or a quaternary carbon atom, or a combination thereof. A phrase containing this term, for example, "C₁-₆ alkyl" refers to alkyl containing 1 to 6 carbon atoms, and may independently be C₁ alkyl, C₂ alkyl, C₃ alkyl, C₄ alkyl, C₅ alkyl or C₆ alkyl at each occurrence. Suitable examples include, but are not limited to, methyl (Me, -CH₃), ethyl (Et, -CH₂CH₃), 1-propyl (n-Pr, n-propyl, -CH₂CH₂CH₃), 2-propyl (i-Pr, i-propyl, -CH(CH₃)₂), 1-butyl (n-Bu, n-butyl, -CH₂CH₂CH₂CH₃), 2-methyl-1-propyl (i-Bu, i-butyl, -CH₂CH(CH₃)₂), 2-butyl (s-Bu, s-butyl, -CH(CH₃)CH₂CH₃), 2-methyl-2-propyl (t-Bu, t-butyl, -C(CH₃)₃), 1-pentyl (n-pentyl, -CH₂CH₂CH₂CH₂CH₃), 2-pentyl (-CH(CH₃)CH₂CH₂CH₃), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl (-CH₂CH(CH₃)CH₂CH₃), 1-hexyl (-CH₂CH₂CH₂CH₂CH₂CH₃), 2-hexyl (-CH(CH₃)CH₂CH₂CH₂CH₃), 3-hexyl (-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2,3-dimethyl-2-butyl (-C(CH₃)₂CH(CH₃)₂), and 3,3-dimethyl-2-butyl (-CH(CH₃)C(CH₃)₃.

In the present application, unless otherwise specified, the term "alkoxy" refers to a group with the structure -O-alkyl, where the alkyl defined above is linked to an adjacent group via an oxygen atom. Phrases containing this term, for example, "C₁-₆ alkoxy" refers to that the alkyl moiety contains 1 to 6 carbon atoms, and can independently be C₁ alkoxy, C₂ alkoxy, C₃ alkoxy or C₄ alkoxy, C₅ alkoxy or C₆ alkoxy at each occurrence. Suitable examples include, but are not limited to: methoxy (-O-CH₃ or -OMe), ethoxy (-O-CH₂CH₃ or -OEt) and tert-butoxy (-OC(CH₃)₃ or - OtBu).

In the present application, for an atom, a group or a compound residue participating in forming a covalent bond, its valence refers to the number of connection sites of the atom, the group or the compound residue participating in forming the covalent bond. For example, the valence of alkyl (-CH₃) is monovalent, and the valence of alkylene (-CH₂-) is divalent. Also for example, the valence of groups such as -OH, -CH₃, -CN, etc. is monovalent, while the valence of -CH₂- and -O- is divalent. Those skilled in the art can understand the difference between this "valence state" and a charge valence state of an ion.

Herein, unless otherwise specified, "halogen" or "halo group" refers to F, Cl, Br or I.

In the present application, unless otherwise specified, the electrode plate may be the positive electrode plate or the negative electrode plate, and the "active material" in the electrode plate refers to a substance capable of reversibly intercalating and deintercalating active ions. Unless otherwise specified, the "negative electrode active material" refers to a substance used for a negative electrode plate and capable of reversibly intercalating and deintercalating active ions, and is also referred to as a negative electrode active material; and the "positive electrode active material" refers to a substance used for a positive electrode plate and capable of reversibly deintercalating and intercalating active ions, and is also referred to as a positive electrode active material. During charging of the secondary battery, the active ions are deintercalated from the positive electrode, and are intercalated into the negative electrode through the electrolyte; while during discharging of the secondary battery, the active ions are deintercalated from the negative electrode, and are intercalated into the positive electrode. The active ions are not particularly limited, and may be lithium ions. Without limitation, the active ions may be lithium ions, and the secondary battery at this time is a lithium-ion secondary battery.

In the present application, the terms "electrode active material", "electrode active substance", "active material," and "active substance" have the same meaning and can be used interchangeably; the terms "positive electrode active substance" and "positive electrode active material" have the same meaning and can be used interchangeably; and the "negative electrode active substance" and "negative electrode active material" have the same meaning and can be used interchangeably. The terms "positive electrode active substance" and "positive electrode active material" have the same meaning and can be used interchangeably; and the "negative electrode active substance" and "negative electrode active material" have the same meaning and can be used interchangeably.

In the present application, unless otherwise specified, the "active material layer" includes at least one of the positive electrode active material layer of the positive electrode plate and the negative electrode active material layer of the negative electrode plate, and may indicate the positive electrode active material layer or the negative electrode active material layer depending on the detailed circumstances. It can be understood that the positive electrode active material layer contains the positive electrode active substance, and the negative electrode active material layer contains the negative electrode active substance. In the present application, the "electrode active material layer" may also be referred to as the "active material layer" for short.

By introducing a gel electrolyte into the secondary battery, the traditional liquid electrolyte is transformed into a gel form, which helps to fix the electrolyte and suppress electrolyte leakage, which can improve the reliability and cycling life of the battery, so that the battery is a highly promising secondary battery. The introduction of the gel electrolyte is often achieved by adding a gelation reaction system containing polymeric monomers to an electrolyte solution to prepare a precursor solution, which is then subjected to an in-situ curing reaction to transform the precursor solution into a gel electrolyte. In order to achieve the smooth transport of active ions within the positive and negative electrode plates during charging and discharging, the precursor solution needs to fully infiltrate the interior of the positive and negative electrode plates before curing, so that the cured gel electrolyte can contact the electrode active substances inside the positive and negative electrode plates. The larger the battery cell, the longer the infiltration time is required, and sometimes high-temperature conditions are also needed for infiltration. Without limitation, when introducing gelled electrolytes into large pouch cells, hard-shell cells, or high-capacity cells, a longer infiltration time and high-temperature infiltration conditions are usually required to achieve a better infiltration effect. Furthermore, the battery formation process usually needs to be carried out under high temperature conditions. However, prolonged infiltration time and high temperature conditions both may trigger the curing reaction of the gelation reaction system. This may lead to the problem of early curing before the procedure of in-situ curing reaction is initiated. The gel formed by early curing will hinder the further infiltration of the electrode plate by the precursor solution, resulting in insufficient infiltration of the electrode plate by the precursor solution. Consequently, the gel electrolyte formed after curing will not be fully distributed in the electrode plate, which will lead to reduced capacity utilization of the cell and lithium plating at the negative electrode interface (taking lithium ions as an example of the active ions), thus deteriorating the cycling performance of the battery. Regarding the issue of lithium plating at the negative electrode interface, taking lithium ions as an example of the active ions, it may be that some of the negative electrode active substances inside the negative electrode plate cannot be fully infiltrated by the precursor solution, which leads to poor contact with the gel electrolyte. Consequently, the negative electrode plate cannot fully accept lithium ions from the positive electrode, and the excess lithium ions are deposited on the negative electrode surface to form lithium metal. The lithium metal formed on the negative electrode surface will further react with the electrolyte solution to form a solid electrolyte interface (SEI) film, consuming the electrolyte solution and thus reducing the cycling stability of the battery cell. Moreover, during the high-temperature formation stage, the process of forming the SEI film will generate a certain amount of heat. If the cell heat dissipation is not timely (for example the heat dissipation of large cells may not be ideal), the cell temperature will rise further, which can easily trigger the in-situ solidification reaction of the precursor solution, affecting the formation of the SEI film and the electrochemical performance of the battery.

Based on this, according to various embodiments and examples of the present application, the present application provides at least a secondary battery, a gel electrolyte precursor solution, a preparation method, and an electrical apparatus. The secondary battery has excellent capacity utilization and cycling performance.

In a first aspect of the present application, a secondary battery is provided. The secondary battery includes a gel electrolyte including a first gel electrolyte located inside an electrode active material layer and a second gel electrolyte located outside an electrode plate. The first gel electrolyte and the second gel electrolyte each independently includes a crosslinked polymer, a gelling solvent and an electrolyte salt, wherein the crosslinked polymer includes a carbon-based segment; and the gel electrolyte includes a polymerization inhibitor residue.

In some embodiments, a secondary battery is provided, which includes a plurality of electrode plates, where the plurality of electrode plates include positive electrode plates and negative electrode plates; any one of the electrode plates independently includes an electrode active material layer;
the secondary battery includes a gel electrolyte, which includes a first gel electrolyte and a second gel electrolyte, the first gel electrolyte is located inside the electrode active material layer, and the second gel electrolyte is located outside the plurality of electrode plates; wherein the first gel electrolyte and the second gel electrolyte each independently includes a crosslinked polymer, a gelling solvent, and an electrolyte salt;
wherein the crosslinked polymer includes a carbon-based segment; the gel electrolyte includes a polymerization inhibitor residue, which is a substance generated from a polymerization inhibitor following a free radical polymerization inhibition reaction, and the polymerization inhibitor includes a polymerization inhibition group capable of terminating the free radical polymerization reaction.

The secondary battery provided by the present application is a battery including a gel electrolyte.

In the present application, the "gel electrolyte" is a semi-solid electrolyte with the following features: it includes a gel skeleton, a gelling solvent located in the gel skeleton area, and an electrolyte salt dissolved in the gelling solvent. The gel skeleton is a crosslinked polymer with a three-dimensional network structure; the gelling solvent is bound in grid of the gel skeleton and cannot flow freely, so that the electrolyte in the gel skeleton region presents a gelatinous semi-solid state; and the electrolyte salt is dissolved in the gelling solvent, which cannot migrate freely in the whole area of the gel electrolyte, but can move in a short distance in the limited space of the grid in the gel skeleton. In addition, the gelling solvent has a certain continuous distribution in the gel skeleton, so that the gel electrolyte can still conduct active ions. Moreover, the molecular chain segments between adjacent crosslinking points in the gel skeleton still have a certain flexibility, which makes the network structure have not only a certain degree of support but also a certain elasticity. However, the chain segments between these crosslinking points are restricted between the corresponding nodes of the grid and cannot diffuse freely in the solvent like free molecules. Therefore, the gel electrolyte has both the solidity of the gel skeleton and the restricted fluidity of the gelling solvent in terms of physical morphology, which is significantly different from traditional electrolyte solutions that can flow freely and have no fixed shape.

The traditional electrolyte solution is an electrolyte in a liquid state, also called liquid electrolyte, which includes an electrolyte salt and a solvent. The solvent can flow freely, the electrolyte salt dissolved in the solvent can migrate freely, and the liquid electrolyte can flow freely and has no fixed shape as a whole.

It can be understood that the migration ability of the electrolyte salt in the gel electrolyte is lower than the migration ability of the electrolyte salt in the liquid electrolyte.

In the context of the present application, the terms "first" and "second" in the "first gel electrolyte" and the "second gel electrolyte" are used only for descriptive purposes, and can neither be construed as indicating or implying a relative importance or number, nor be construed as implicitly indicating the importance or number of indicated technical features.

In the present application, the "cross-linked polymer" has a well-known meaning in the technical field of polymers. It has a three-dimensional network structure and can swell to a certain extent in corresponding solvents, but will not dissolve. The degree of swelling depends on the degree of crosslinking of the crosslinked polymer.

In the present application, unless otherwise stated, the "carbon-based segment" refers to a segment composed of carbon atoms that can be formed through a free radical polymerization reaction of unsaturated carbon-carbon double bonds.

In the present application, unless otherwise specified, "polymerization inhibition residue" refers to a substance generated from the polymerization inhibitor following a free radical polymerization inhibition reaction, and the "polymerization inhibitor" includes a polymerization inhibition group capable of terminating the free radical polymerization reaction. The polymerization inhibitor can quench free radicals by using the polymerization inhibition groups it contains, thus forming polymerization inhibition residues. "The substance generated after the polymerization inhibitor undergoes a free radical polymerization reaction" is usually a byproduct for the gelation reaction system that forms a gel electrolyte. For the gelation reaction system in the present application, those skilled in the art can usually infer the type and structure of the polymerization inhibitor based on the structure of the polymerization inhibitor residue. The definition of the polymerization inhibitor can also be found in the context of the present application.

The secondary battery has a gel electrolyte that is fully distributed within the electrode plates. The gel electrolyte can be formed by infiltrating the electrode plates with a gel electrolyte precursor solution containing a polymerization inhibitor, performing formation, and then conducting curing. At this time, polymerization inhibitor residues may exist in the secondary battery. By utilizing the polymerization inhibition effect of the polymerization inhibitor, the curing reaction can be inhibited during the infiltrating and formation stages of the electrode plates, thereby controlling the occurrence time of the curing reaction. This can improve the infiltration effect of the gel electrolyte precursor solution on the interior of the electrode plate, promoting the full distribution of the gel electrolyte precursor solution inside the electrode plate. It also facilitates the full contact and infiltrating between the precursor solution and the electrode active particles, and promotes the full contact between the cured gel electrolyte and the electrode active materials inside the electrode plate, thereby optimizing the transport channels of active ions, and thus promoting the capacity utilization of the positive electrode plate, the negative electrode plate, and the battery cell. Furthermore, it helps to suppress the lithium plating problem at the negative electrode interface and improve the cycling performance of the battery.

In the context of the present application, parameters such as weight, volume, element distribution, etc. in the gel electrolyte at different positions can be tested and analyzed according to focused electron beam (FIB) technology, scanning electron microscope (SEM) technology, and elemental analysis technology. For example, it can be analyzed in connection with focused electron beam (FIB) continuous sectioning, cross-sectional SEM morphology observation, energy dispersive spectroscopy (EDS) combined with elemental energy spectrum, and three-dimensional reconstruction analysis software. For example, the samples are finely sliced (the smallest scale can reach nano-scale slices) by freezing focused ion beam (FIB) and separated to obtain electrode active material layers or gel electrolyte samples. The morphology, structure and element distribution of each layer of section can also be analyzed by scanning electron microscope (SEM) under FIB continuous slicing, and the three-dimensional structure of the sample can be reconstructed in connection with three-dimensional structure reconstruction software, and the quality and/or volume of the sample to be measured can be estimated. By disassembling the battery, samples from different positions such as the electrode active material layer sample of the electrode plate (including the first gel electrolyte), the second gel electrolyte sample outside the electrode plate can be obtained, and then the aforementioned method can be used to test parameters such as weight, volume, and element distribution. As an optional example, the test and analysis of the aforementioned parameters can use a FEI Scios 2HiVac device.

In some embodiments, the mass fraction of the polymerization inhibitor residue in the gel electrolyte can be, but is not limited to, 50 ppm-2,000 ppm, optionally 500 ppm-1,000 ppm, or any of the following mass fractions or an interval formed by any two of the following mass fractions: 50 ppm, 150 ppm, 200 ppm, 250 ppm, 300 ppm, 400 ppm, 500 ppm, 600 ppm, 800 ppm, 1,000 ppm, 1,200 ppm, 1,400 ppm, 1,500 ppm, 1,600 ppm, 1,800 ppm, 2,000 ppm, etc.

In the present application, percentages and ppm (parts per million) can be converted, 1% = 10,000 ppm. For example, 0.2% = 2,000 ppm, 0.1% = 1,000 ppm, 0.01% = 100 ppm, 0.005% = 50 ppm, etc.

The content of the polymerization inhibitor residue in the gel electrolyte is mainly related to the amount of the polymerization inhibitor used in the preparation process. By controlling the mass fraction of the polymerization inhibitor residue in the gel electrolyte within the aforementioned range, it is beneficial to better control the start time of the curing reaction, obtain a better infiltrating effect, promote more full distribution of the gel electrolyte inside the electrode plate, facilitate the rapid transport of active ions inside the electrode plate, and achieve better capacity utilization and cycling performance.

Traditional polymerization inhibitors are mainly used for the preservation of polymeric monomers. Before use, the polymerization inhibitors are usually removed, for example by treatment with alkali (such as sodium hydroxide, potassium hydroxide, etc.) to remove the polymerization inhibitors before the polymeric monomers are added to the reaction vessel. After pretreatment, the mass content of polymerization inhibitors or polymerization inhibitor residues in the polymerization reaction system is extremely low, usually less than 10 ppm.

In some embodiments, the polymerization inhibitor residue includes quinone residues of phenolic polymerization inhibitors; wherein the phenolic polymerization inhibitor includes an aromatic ring and a phenolic hydroxyl group directly bonded to the aromatic ring. Further, in a molecule of a phenolic polymerization inhibitor, the polymerization inhibition group may include one or more phenolic hydroxyl groups. Without limitation, in one molecule of a phenolic polymerization inhibitor, the polymerization inhibition group includes 1-4 phenolic hydroxyl groups, optionally including 1-3 phenolic hydroxyl groups, for example, including 1, 2 or 3 phenolic hydroxyl groups, and further including 1 or 2 phenolic hydroxyl groups.

In the present application, unless otherwise specified, the "phenolic polymerization inhibitor" refers to a polymerization inhibitor containing at least one phenolic hydroxyl group. The "quinone residue of the phenolic polymerization inhibitor" refers to a quinone product formed after the phenolic polymerization inhibitor quenches free radicals.

In the present application, unless otherwise specified, the "phenolic hydroxyl" refers to a hydroxyl group that is directly bonded to an aromatic ring via a covalent bond. In the present application, unless otherwise specified, the "aromatic ring" refers to a ring with aromatic properties, which may be a carbon ring, but is not limited thereto. Non-limiting examples of carbon rings with aromatic properties include benzene rings.

In some embodiments, the phenolic hydroxyl group is a hydroxyl group linked to a benzene ring.

In some embodiments, the polymerization inhibitor residue includes a quinone residue of a phenolic polymerization inhibitor.

In some embodiments, the phenolic polymerization inhibitor includes one or more of the following compounds: one or more of phenol, 2,6-di-tert-butylphenol, p-methoxyphenol, 2,6-di-tert-butyl-4-methylphenol, hydroquinone, catechol, 2-nitrohydroquinone, monomethyl hydroquinone, trimethyl hydroquinone, p-tert-butylcatechol, 2,5-di-tert-butylhydroquinone, bisphenol A, 4,4'-dihydroxybiphenyl, 4,4'-butylidene bis(6-tert-butyl-3-methylphenol), benzenetriol and 4-bromophenol.

The phenolic polymerization inhibitor is a kind of free radical polymerization inhibitor that has a wide range of polymerization inhibition effects on various free radical polymeric monomers. It has a good polymerization inhibition effect on polymeric monomers such as acrylates and styrenes, and can quench free radicals generated by the decomposition of the initiator. The appropriate type of polymerization inhibitor can be selected according to the requirements of polymerization inhibition time and polymerization inhibition efficiency.

In some embodiments, the crosslinked polymer includes repeating units formed by free radical polymerization of polymeric monomers; the polymeric monomer includes a polyene compound, and also includes or does not include a monoene compound, wherein the polyene compound has multiple polymerizable carbon-carbon double bonds, and the monoene compound has one polymerizable carbon-carbon double bond;

Without limitation, the polyene compound includes, but is not limited to one or more of ethylene glycol diacrylate, ethylene glycol dimethacrylate, polyethylene glycol diacrylate, polyethylene glycol dimethacrylate, 1,4-butanediol dimethacrylate, 1,6-hexanediol dimethacrylate, 1,4-butanediol diacrylate, glyceryl dimethacrylate, dimethyl 1,2-propylene glycol acrylate, 1,3-butanediol dimethacrylate, dipropylene glycol diacrylate, trimethylolpropane trimethylacrylate, trimethylolpropane triacrylate, glyceryl trimethylacrylate, triallyl trimesate, cyclohexanetriol trimethylacrylate, pentaerythritol triacrylate, pentaerythritol tetraacrylate and pentaerythritol tetramethylacrylate.

In the present application, unless otherwise specified, the "polymeric monomer" refers to the polymeric monomer used in the gelation reaction system for forming the gel electrolyte, which can form a crosslinked polymer through free radical polymerization. After free radical polymerization, the polymeric monomers are transformed into repeating units in the crosslinked polymer.

In some embodiments, without limitation, the molecular weight of the polymeric monomer may be less than or equal to 2,000 Da, further less than or equal to 1,000 Da, even further less than or equal to 550 Da, and even further less than or equal to 500 Da. It may also be any of the following molecular weights or a range selected from any two of the following molecular weights: 53 Da, 60 Da, 70 Da, 71 Da, 72 Da, 80 Da, 85 Da, 86 Da, 100Da, 102 Da, 104 Da, 105 Da, 110 Da, 112 Da, 116 Da, 120 Da, 125 Da, 130 Da, 140 Da, 142 Da, 145 Da, 150 Da, 154 Da, 155 Da, 158 Da, 160 Da, 168 Da, 170 Da, 180 Da, 182 Da, 190 Da, 192 Da, 195 Da, 200 Da, 220 Da, 225 Da, 230 Da, 238 Da, 240 Da, 250 Da, 260 Da, 280 Da, 290 Da, 295 Da, 298 Da, 300 Da, 320 Da, 330 Da, 335 Da, 350 Da, 352 Da, 355 Da, 360 Da, 380 Da, 398 Da, 400 Da, 500 Da, 550 Da, 600 Da, 700 Da, 750 Da, 800 Da, 900 Da, 1,000 Da, 1,100 Da, 1,200 Da, 1,250 Da, 1,300 Da, 1,400 Da, 1,500 Da, 1,600 Da, 1,800 Da, 2,000 Da, etc., but not limited to this. In some embodiments, the molecular weight of the polymeric monomer is selected from 100 Da to 2,000 Da, or may be selected from the interval formed by any two molecular weights within this range (see the molecular weight between 100 Da-2,000 Da listed in the previous text).

In the present application, the "molecular weight" of a compound, unless otherwise specified, refers to the molecular mass measured in Daltons (Da), where 1 Dalton is equal to one-twelfth of the mass of a ¹²C atom. Unless otherwise specified, the average molecular weight of the polymer is greater than or equal to (≥) 1,000 Da. 1 kDa = 1,000 Da. The average molecular weight of substances with polydisperse molecular weights (such as polymers) may refer to the weight-average molecular weight, unless otherwise specified.

In some embodiments, the polyene compound includes the polyethylene glycol segment - (OCH₂CH₂)ₙO-, where n is an integer greater than or equal to 2 unless otherwise specified. Optionally, n can be an integer from 2-20, such as 2, 3, 4, 5, 6, 7, 8, 9, 10, 11, 12, 13, 14, 15, 16, 17, 18, 19, 20, etc. In some embodiments, n is an integer from 2-10, optionally an integer from 2-6, further optionally 2, 3, 4, 5 or 6, and further optionally 2, 3 or 4. The polymeric monomer can be a polyene compound or a monoene compound.

In the present application, unless otherwise specified, the "polyene compound" refers to a compound having multiple polymerizable carbon-carbon double bonds, and the "monoene compound" refers to a compound having one polymerizable carbon-carbon double bond, where the "polymerizable carbon-carbon double bond" refers to a carbon-carbon double bond capable of undergoing free radical polymerization. Repeating units formed by polyene compounds can participate in the formation of crosslinking points in the crosslinked polymer, while repeating units formed by monoene compounds can participate in the formation of linear segments between adjacent crosslinking points.

In some embodiments, the "polymerizable carbon-carbon double bond" is an α-carbon-carbon double bond, which refers to a carbon-carbon double bond located at the end group. Without limitation, the polymerizable carbon-carbon double bond can be CH₂=CH(R₀₁)-, and R₀₁ can be independently H or methyl at each occurrence. In some embodiments, R₀₁ is H. In some other embodiments, R₀₁ is methyl.

Different types of polymeric monomers can be flexibly selected according to the structural requirements of the crosslinked polymer in the gel electrolyte. The polymeric monomer includes a polyene compound, and the crosslinked polymer has a network crosslinked structure, so that the gel electrolyte has both the solidity of a gel skeleton and the confined flow phase of the gelling solvent in terms of physical morphology. By introducing the monoene compound, the distance between adjacent crosslinking degrees in the network crosslinked structure can be adjusted, thereby modifying the flexibility of the gel electrolyte.

In some embodiments, an electrode active material layer in the positive electrode plate is denoted as a positive electrode active material layer, and an electrode active material layer in the negative electrode plate is denoted as a negative electrode active material layer;
the volume of the gel electrolyte in the positive electrode active material layer is denoted as V_{P1}, and the volume and porosity of the positive electrode active material layer are denoted as V_{P2} and φ_{P} respectively; so as to define α_{P} = V_{P1} / (V_{P2} × φ_{P});
the volume of the gel electrolyte in the negative electrode active material layer is denoted as V_{N1}, and the volume and porosity of the negative electrode active material layer are denoted as V_{N2} and φ_{N2} respectively; so as to define α_{N} = V_{N1} / (V_{N2} × φ_{N});
wherein α_{P} and α_{N} are each independently greater than or equal to 0.85; and
optionally, α_{P} and α_{N} are each independently greater than or equal to 0.9.

The extent to which the gel electrolyte is distributed within the electrode plate can be reflected by the filling coefficients α_{P} and α_{N}. α_{P} refers to the filling ratio of the gel electrolyte in the internal pores of the positive electrode active material layer, and α_{N} refers to the filling ratio of the gel electrolyte in the internal pores of the negative electrode active material layer. The higher the values of α_{P} and α_{N}, the more fully the gel electrolyte is distributed inside the electrode plate, and the higher the degree of contact with the electrode active substance.

In some embodiments, the secondary battery includes a separator located between the positive electrode plate and the negative electrode plate, and the positive electrode plate, the negative electrode plate and the separator form an electrode assembly;
the α_{P} of the positive electrode active material layer located at the innermost side of the electrode assembly is denoted as α_{P0}, and the α_{N} of the negative electrode active material layer located at the innermost side of the electrode assembly is denoted as α_{N0};
wherein α_{P0} and α_{N0} are each independently greater than or equal to 0.85; and
optionally, α_{P0} and α_{N0} are each independently greater than or equal to 0.9.

For the electrode assembly, the further away from the outer surface of the electrode assembly or the closer to the innermost side of the electrode assembly, the more difficult it is for the gel electrolyte precursor solution to infiltrate the electrode plate. Therefore, the higher the filling coefficients α_{P0} and α_{N0} at the innermost side of the electrode assembly, the more fully the gel electrolyte is distributed inside the electrode plate in the secondary battery.

In the present application, the mass and volume of the gel electrolyte in the positive electrode active material layer can be denoted as M_{P1} and V_{P1}, respectively; the volume and porosity of the positive electrode active material layer can be denoted as V_{P2} and φ_{P}, respectively; the mass and volume of the gel electrolyte in the negative electrode active material layer can be denoted as M_{N1} and V_{N1}, respectively; and the volume and porosity of the negative electrode active material layer can be denoted as V_{N2} and φ_{N2}, respectively. It is further defined that, the filling coefficient α_{P} of the gel electrolyte in the positive electrode active material layer = V_{P1} / (V_{P2} × φ_{P}), and the filling coefficient α_{N} of the gel electrolyte in the negative electrode active material layer = V_{N1} / (V_{N2} × φ_{N}). The theoretical value range of α_{P} and α_{N} is 0-1. When the value is 0, there is no gel electrolyte inside the electrode plate; and when the value is 1, the inside of the electrode plate is completely filled. The higher the values of α_{P} and α_{N}, the more fully the gel electrolyte is distributed inside the electrode plate.

In the present application, unless otherwise specified, the sample to be tested for the electrode active material layer of the electrode plate can be prepared by the following methods: discharging the secondary battery to a nominal lower limit voltage, then disassembling the battery cell to obtain the positive electrode plate and the negative electrode plate, and then extracting the sample to be tested for the positive electrode active material layer and the sample to be tested for the negative electrode active material layer. The nominal lower limit voltage can be obtained by testing with conventional methods or according to the definition from the manufacturer.

Focused electron beam (FIB) technology and scanning electron microscopy (SEM) can be used for testing and analysis. In connection with focused electron beam (FIB) continuous slicing, energy dispersive spectroscopy (EDS) combined with elemental energy spectrum and three-dimensional reconstruction analysis software, relevant parameters of local regions of the electrode active material layer (e.g. the mass Mᵢ and volume Vᵢ of the local region, the mass Mᵢ₁ and volume Vᵢ₁ of the gel electrolyte in the local region, and the porosity φᵢ of the local region) can be obtained, thereby obtaining the test values of α_{P} and α_{N}. The FEI Scios 2HiVac device can be used.

In the present application, unless otherwise specified, α_{P} and α_{N} can be calculated by selecting several local regions, calculating the corresponding filling coefficients, and taking the average value as the test value. More specifically, for α_{P} and α_{N}, several local regions with a certain lateral area can be selected at different lateral positions of the electrode active material layer. The local regions at selected lateral positions are continuously sliced along the thickness direction of the electrode active material layer. According to the three-dimensional reconstruction results, the filling coefficient αᵢ of the local regions is calculated as = Vᵢ₁ / (Vᵢ × φᵢ). The average value of the filling coefficient αᵢ of different local regions is taken as the test value of α_{P} or α_{N}, where Vᵢ₁ is the volume of the gel electrolyte in the selected local region, Vᵢ is the volume of the selected local region, and φᵢ is the porosity of the selected local region.

In the present application, unless otherwise specified, "several local regions" may refer to at least 3, further such as at least 6, and even further such as at least 9 local regions.

In the present application, unless otherwise specified, "lateral" in "different lateral positions of the electrode active material layer" refers to the direction perpendicular to the thickness direction of the corresponding electrode active material layer.

For α_{P} and α_{N}, local regions of the electrode active material layer can be selected at multiple radial locations of the electrode assembly; and "multiple radial locations of the electrode assembly" refers to different positions of the electrode assembly in the direction from the inside to the outside in the three-dimensional space. The "multiple radial locations of the electrode assembly" may include at least two locations among the innermost, outermost, and intermediate locations between the innermost and outermost of the electrode assembly.

Taking an electrode assembly with a winding structure as an example, without limitation, by stacking in the order of "separator-negative electrode plate-separator-positive electrode plate" and winding them around a winding shaft in the same direction, a multi-layer assembly can be formed. From the winding shaft to the outer surface of the multi-layer assembly, the negative electrode plate and the positive electrode plate are wound into multiple turns respectively. At this time, the positive electrode active material layer of the positive electrode plate located in the innermost ring of the multi-layer assembly can correspond to the "positive electrode active material layer located on the innermost side of the electrode assembly", and the portion of the positive electrode active material layer in the outermost ring of the multi-layer assembly can correspond to the "positive electrode active material layer located on the outermost side of the electrode assembly". The portion of the positive electrode active material layer of the positive electrode plate between the innermost ring and the outermost ring can correspond to "the positive electrode active material layer located in the middle part between the innermost and outermost sides of the multi-layer assembly"; the portion of the negative electrode active material layer of the negative electrode plate located in the innermost ring of the multi-layer assembly can correspond to "the negative electrode active material layer located in the innermost side of the electrode assembly", the portion of the negative electrode active material layer located in the outermost ring of the multi-layer assembly can correspond to "the negative electrode active material layer located in the outermost side of the electrode assembly", and the portion of the negative electrode active material layer between the innermost and outermost rings of the negative electrode plate can correspond to "the negative electrode active material layer located in the middle part between the innermost and outermost sides of the multi-layer assembly". The aforementioned "multilayer assembly" is a type of electrode assembly with a winding structure.

Taking the electrode assembly with a stacked structure as an example, a separator is disposed between any adjacent positive and negative electrode plates. The resulting stacked structure has a certain thickness along the stacking direction and a certain area in the direction perpendicular to the stacking direction. Therefore, the electrode assembly with the stacked structure has a certain volume in a three-dimensional space. Further, according to the distance from the outer three-dimensional contour of the stacked structure, the innermost side, the outermost side, and the middle parts between the innermost side and the outermost side can be distinguished. For example, "the positive electrode active material layer located at the innermost side of the electrode assembly" can correspond to the thickness center along the stacking direction and the area center of the positive electrode plate located at the thickness center; "the positive electrode active material layer located at the outermost side of the electrode assembly" can correspond to the two ends along the stacking direction and the area edge of the positive electrode plate located at the two ends; "the negative electrode active material layer located at the innermost side of the electrode assembly" can correspond to the thickness center along the stacking direction and the area center of the negative electrode plate located at the thickness center; and "the negative electrode active material layer located at the outermost side of the electrode assembly" can correspond to the two ends along the stacking direction and the area edge of the negative electrode plate located at the two ends.

For α_{P0}and α_{N0}, local regions of multiple electrode active material layers are selected on the innermost side of the electrode assembly.

In the present application, unless otherwise specified, "several local regions" selected at different lateral positions of the electrode active material layer may refer to at least 3, further such as at least 6, and even further such as at least 9 local regions.

Without limitation, "certain lateral area" in the "local region with a certain lateral area" can refer to greater than or equal to 16 µm², further such as greater than or equal to 25 µm², even further such as greater than or equal to 36 µm², even further such as greater than or equal to 64 µm², and even further such as greater than or equal to 100 µm². It can be understood that the local region corresponding to the selected lateral area can cover multiple relatively complete pores.

For the "local region of the electrode active material layer", within the selected lateral area, a slice scan can be performed over the entire or part of the thickness of the electrode active material layer. The thickness of each local region can be greater than or equal to 4 µm, further such as greater than or equal to 5 µm, even further such as greater than or equal to 6 µm, even further such as greater than or equal to 8 µm, and even further such as greater than or equal to 10 µm.

In the present application, unless otherwise specified, the porosity φ_{P} of the positive electrode active material layer can be measured based on the average value of the porosity of several (at least three, further such as more than or equal to 6) local regions in the positive electrode active material layer as a test value. The porosity φ_{P} of the negative electrode active material layer can be measured based on the average value of the porosity of several (at least three, further such as more than or equal to six) local regions in the negative electrode active material layer as a test value.

In the present application, unless otherwise specified, the mass M_{P1} and volume V_{P1} of the gel electrolyte in the positive electrode plate, the volume V_{P2} of the positive electrode active material layer, the mass M_{N1} and volume V_{P1} of the gel electrolyte in the negative electrode plate, and the volume N_{V2} of the negative electrode active material layer can be obtained by selecting several (e.g., at least 3, further such as more than or equal to 6) local regions, calculating the corresponding parameters, then averaging the parameters, and then converting in connection with the mass, volume, thickness, and the like parameters of each part obtained from the cell disassembly as well as the corresponding proportional coefficient of the local region.

In some embodiments, any electrode plate independently includes a current collector and an electrode active material layer that is disposed on at least one side of the current collector.

In some embodiments, the positive electrode plate includes a positive electrode current collector and a positive electrode active material layer disposed on at least one side of the positive electrode current collector.

In some embodiments, the negative electrode plate includes a negative current collector and a positive electrode active material layer disposed on at least one side of the negative current collector.

The secondary battery provided by the present application includes a battery cell.

In the present application, unless otherwise stated, the "battery cell" refers to a basic unit that can achieve mutual conversion between chemical energy and electrical energy, and further, generally at least includes a positive electrode plate, a negative electrode plate, and an electrolyte. During the charging and discharging process of the battery, active ions are intercalated and deintercalated back and forth between the positive electrode plate and the negative electrode plate. The electrolyte plays a role in conducting active ions between the positive electrode plate and the negative electrode plate.

In an embodiment of the present application, the secondary battery includes a positive electrode plate, a negative electrode plate and an electrolyte, and the electrolyte at least includes the aforementioned gel electrolyte. During the charging and discharging process of the battery, active ions are intercalated and deintercalated back and forth between the positive electrode plate and the negative electrode plate. The electrolyte serves for conducting the active ions between the positive electrode plate and the negative electrode plate.

In an embodiment of the present application, the secondary battery includes a positive electrode plate, a negative electrode plate, an electrolyte and a separator, and the electrolyte at least includes the aforementioned gel electrolyte. During the charging and discharging process of the battery, active ions are intercalated and deintercalated back and forth between the positive electrode plate and the negative electrode plate. The electrolyte serves for conducting the active ions between the positive electrode plate and the negative electrode plate. The separator is provided between the positive electrode plate and the negative electrode plate, and mainly functions to prevent a short circuit between the positive electrode and the negative electrode, while allowing active ions to pass through.

The types of active ions can be as described above.

The following are some descriptions about the electrolyte in the secondary battery.

The electrolyte plays a role in conducting ions between the positive electrode plate and the negative electrode plate. The electrolyte in the secondary battery provided by the present application at least includes the aforementioned gel electrolyte. In some embodiments, the electrolyte in the secondary battery is a gel electrolyte.

In the present application, unless otherwise stated, the gel electrolyte is distributed both within the electrode active material layer of the electrode plate and on the outside of the electrode plate. A gel electrolyte at any location independently includes a crosslinked polymer, a gelling solvent, and an electrolyte salt.

A gel skeleton in the gel electrolyte can be formed through a polymerization reaction of a polymeric monomer. During the polymerization reaction, a corresponding initiator and/or a crosslinking agent can be added.

The reaction in which polymeric monomer is used for forming a gel skeleton is generally a polymerization reaction and a crosslinking reaction. Monomers involved in the formation of the gel skeleton through the polymerization reaction may be collectively referred to as polymeric monomers. The polymeric monomer at least includes, but is not limited to, a crosslinkable monomer. An example of the crosslinkable monomer is a polyene compound, but not limited thereto. For example, the polymeric monomer may also include a chain-extending monomer. The chain-extending monomer can provide a linear chain segment between crosslinking points of the gel skeleton. An example of the chain-extended monomer includes a monoene compound.

In the present application, the crosslinkable monomer includes a functional group pair that can undergo a crosslinking reaction. Non-limiting examples of the functional group pair capable of undergoing the crosslinking reaction include, for example, a plurality of carbon-carbon double bonds, further for example, a monomer comprising at least 2 carbon-carbon double bonds; and for example, a crosslinking monomer combination, further for example, the crosslinking monomer combination comprising two monomers, one monomer comprising at least 2 reactive radicals F1, the other monomer comprising at least 3 reactive radicals F2, the F1 and the F2 capable of being coupled to form a covalent bond. Non-limiting examples of the carbon-carbon double bond include, for example, CH₂=CH-CH₂- and CH₂=C(CH₃)-CH₂-. A hydrogen atom on the carbon-carbon double bond may be substituted with an appropriate substituent, as long as the crosslinking polymerization reaction is not affected. Non-limiting examples of the crosslinking monomer combination include, for example, a combination of a polyol or a polyamine with a polyisocyanate, which can undergo a coupling reaction between -OH or an amino (such as -NH₂ or >NH) and - NCO to form a polyurethane or polyurea, and further for example, a combination of a polyacid and a polyamine, which can undergo a coupling reaction between -COOH and -NH₂ or >NH to form a polymer containing an amide bond (-CO-NH- or -CO-N<), etc.

In the present application, unless otherwise specified, the "carbon-carbon double bond" refers to a polymerizable carbon-carbon double bond.

The type of the polymerizable monomer may include, but is not limited to, one or more of a carbonate monomer, a sulfone monomer, an isocyanate monomer, an amide monomer, a nitrile monomer, a fluoride monomer, an ether compound monomer, an oligomer containing an ether chain segment, and a siloxane.

During the crosslinking reaction of the crosslinkable monomer, the system may include or may not include an initiator based on the requirements of the crosslinking reaction. When the initiator is added, the initiator may include, but is not limited to, one or more of an azo initiator (such as azobisisobutyronitrile (AIBN)), a peroxide initiator (or referred to as peroxides initiators), an anionic/cationic initiator, an organic metal compound initiator, an amine catalyst initiator, and an organophosphorus initiator. The type and amount of the initiator can be appropriately selected and controlled according to the type and amount of the polymeric monomers (including at least the crosslinkable monomer).

In the present application, the gel electrolytes at different positions (such as the first gel electrolyte, the second gel electrolyte) may be the same or different in terms of composition. The electrolyte salts in the gel electrolytes at different positions may be the same or different. The electrolyte salt in the first gel electrolyte and the second gel electrolyte may be the same or different. The gelling solvents in the gel electrolytes at different positions may be the same or different. The gelling solvents in the first gel electrolyte and the second gel electrolyte may be the same or different.

In some embodiments, the first gel electrolyte and the second gel electrolyte have the same composition, that is, they have the same type of crosslinking polymer, electrolyte salt and gelling solvent, the same molar concentration of the electrolyte salt in the first gel electrolyte and the same weight percentage of the crosslinking polymer in the first gel electrolyte and the second gel electrolyte; the several instances of "same" here can be understood as being obtained through the same gelation reaction system.

In some embodiments, the electrolyte salt in the gel electrolyte includes an electrolyte lithium salt. At this time, the ions that can be ionized from the electrolyte salt include lithium ions, which is more conducive to conducting active lithium ions. Without limitation, the molar concentration of the electrolyte salt in the gel electrolyte can be 0.4 mol/L-5 mol/L, but is not limited thereto.

In some embodiments, the electrolyte salt in the gel electrolyte is an electrolyte lithium salt.

In some embodiments, the secondary battery is a lithium-ion secondary battery, and the electrolyte salt may include an electrolyte lithium salt. In some embodiments, the electrolyte salt in at least one of the first gel electrolyte and the second gel electrolyte includes a lithium salt.

In some embodiments, the electrolyte lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP). In some embodiments, the electrolyte lithium salt may include one or more of lithium hexafluorophosphate, lithium tetrafluoroborate, lithium bis(fluorosulfonyl)imide (LiFSI), lithium bis(trifluoromethanesulfonyl)imide, lithium difluoro(oxalato)borate, lithium perchlorate, lithium trifluoromethanesulfonate, etc.

In some embodiments, the gelling solvent is a non-aqueous solvent, further can be an organic solvent, and further can include, but is not limited to, one or more of a carboxylate solvent, a carbonate solvent and a sulfone solvent. The carboxylate solvent may be a carboxylate or a halogenated carboxylate thereof, and may further be a C₁₋₃ alkyl ester of a C₂₋₄ alkylcarboxylic acid or a halogenated compound thereof. The halogenated compound of the carboxylate is also a halogenated carboxylate. Examples of C₁₋₄ alkylcarboxylic acids include acetic acid, propanoic acid, and butyric acid. Examples of C₁₋₃ alkyl esters of carboxylic acids include a methyl ester, an ethyl ester, and a propyl ester. The carbonate solvent may be a carbonate or a halogenated compound thereof. The halogenated compound of the carbonate is also a halogenated carbonate. The halogen substituent in the halogenated carboxylate and the halogenated carbonate may be fluorine, and the number of halogen substituents may be 1 to fully halogenated. Taking fluorination as an example, the number of fluorine atoms in the fluorinated carboxylate and the fluorinated carbonate may be 1 to fully fluorinated.

Without limitation, the gelling solvent may include, but is not limited to, one or more of ethylene carbonate (or denoted as vinyl carbonate, EC, 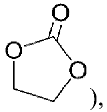 propylene carbonate (or denoted as allyl carbonate, PC, 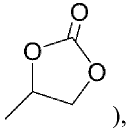 dimethyl carbonate (DMC), diethyl carbonate (DEC), methyl ethyl carbonate (EMC), dipropyl carbonate, diphenyl carbonate, dibutyl carbonate, methyl propyl carbonate (MPC), ethylene propylene carbonate (EPC), butyl carbonate (BC, 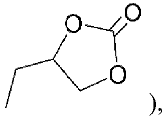 dimethyl fluorocarbonate, fluoroethylene carbonate, bisfluoroethylene carbonate, diethyl fluorocarbonate, methyl ethyl fluorocarbonate, methyl formate (MF), methyl acetate (MA), ethyl acetate (EA), propyl acetate (PA), methyl propionate (MP), ethyl propionate (EP), propyl propionate (PP), butyl propionate, methyl butyrate (MB), ethyl butyrate (EB), propyl butyrate, 1,4-butyrolactone (GBL), sulfolane (SF), methyl sulfone (MSM), ethyl sulfone (EMS) and diethyl sulfone (ESE).

In some embodiments, the gelling solvent may include one or more of ethylene carbonate, propylene carbonate, dimethyl carbonate, diethyl carbonate, methyl ethyl carbonate, dipropyl carbonate, diphenyl carbonate, dibutyl carbonate, butylene carbonate, dimethyl fluorocarbonate, fluoroethylene carbonate, bisfluoroethylene carbonate, diethyl fluorocarbonate, methyl ethyl fluorocarbonate, propyl butyrate, propyl acetate, isopropyl acetate, ethyl propionate, propyl propionate, butyl propionate, isopropyl propionate, ethyl butyrate, methyl ether, propyl ether, butyl ether, ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, crown ether, dimethyl sulfoxide, diphenyl sulfoxide, sulfoxide chloride, sulfolane and dipropylsulfone, etc.

In some embodiments, the gel electrolyte optionally includes an additive. For example, the additive may include a negative-electrode film-forming additive, or a positive-electrode film-forming additive, and may also include an additive capable of improving some performances of the battery, e.g., an additive for improving the overcharge performance of the battery, an additive for improving the high-temperature performance or low-temperature performance of the battery, and the like.

The first gel electrolyte and the second gel electrolyte may independently include or not include an additive. When both of them include additives, the kinds of the additives in both of them can be the same or different.

In some embodiments, the additive in the gel electrolyte may include, but is not limited to, one or more of vinylene carbonate (VC, 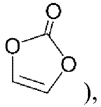 vinyl ethylene carbonate (VEC, 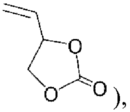 fluoroethylene carbonate (FEC), difluoroethylene carbonate (DFEC), trifluoromethylethylene carbonate (TFPC), methylene methanedisulfonate (MMDS), 1-propylene-1,3-sultone (PST), ethylene sulfite (ES), propylene sulfite (PS), ethylene sulfate (DTD), succinonitrile (SN), adiponitrile (AND), cyclic quaternary ammonium sulfonate, tris(trimethylsilyl) phosphate (TMSP), tris(trimethylsilyl) borate (TMSB) and anisole.

The following are some descriptions of the positive electrode plate.

The positive electrode plate in the secondary battery provided by the present application includes a positive electrode active material layer, and the positive electrode active material layer includes a positive electrode active substance.

In the present application, the positive electrode plate includes a positive electrode current collector and a positive electrode active material layer disposed on at least one surface of the positive electrode current collector, and further, the positive electrode active material layer includes a positive electrode active substance.

Without limitation, the weight percentage of the positive electrode active substance in the positive electrode active material layer may be greater than or equal to 80 wt%, further greater than or equal to 85 wt%, and further greater than or equal to 90 wt%.

As a non-limiting example, the positive electrode current collector has two opposite surfaces in its own thickness direction, and the positive electrode active material layer is disposed on either or both of the two opposite surfaces of the positive electrode current collector.

In some embodiments, a metal foil or a composite current collector can be employed as the positive electrode current collector. For example, if it is the metal foil, an aluminum foil can be adopted. In the positive electrode current collector, the composite current collector may include a polymer material base layer and a metal layer formed on at least one surface of the polymer material base layer. The composite current collector may be obtained by forming a metal material on the polymer material substrate. In the positive electrode current collector, the non-limiting examples of the metal material can include at least one of aluminum, an aluminum alloy, nickel, a nickel alloy, titanium, a titanium alloy, silver, a silver alloy and the like. Without limitation, in the positive electrode current collector, the polymer material substrate may include one or more of polypropylene (PP), polyethylene terephthalate (PET), polybutylene terephthalate (PBT), polystyrene (PS), polyethylene (PE) and the like.

In some embodiments, the positive electrode plate includes a positive electrode active material layer, the positive electrode active material layer includes a positive electrode active substance, and the positive electrode active substance includes a lithium-ion active substance. When the active ions in the gel electrolyte battery includes lithium ions, the electrolyte salt may include lithium salts that are more compatible with the active ions, which helps to better play the role of transporting active lithium ions.

In the present application, the "lithium-ion active substance" refers to a positive electrode active substance capable of providing active lithium ions.

In some embodiments of the present application, the positive electrode active substance includes a lithium-ion substance; and further, the secondary battery is a lithium-ion secondary battery.

In some embodiments of the present application, the secondary battery is a lithium-ion secondary battery. The lithium-ion secondary battery realizes the charging and discharging process by utilizing intercalation and deintercalation of lithium ions in the electrodes and transmission in the electrolyte. Generally, active ions in the lithium-ion secondary battery are, but are not limited to, the lithium ions.

A positive electrode active material for a battery well known in the art may be used as the positive electrode active substance. As a non-limiting example, the positive electrode active substance or the lithium-ion active substance may include one or more of the following materials or substances: a lithium-containing phosphate with an olivine structure, a lithium-transition metal oxide, and respective modified compounds thereof. However, the present application is not limited to these materials or substances, and other conventional materials or substances that may be used as positive electrode active substances of batteries may also be used. Only one of these positive electrode active substances may be used alone, or more than two thereof may be used in combination. Non-limiting examples of the lithium-transition metal oxide may include, but are not limited to, one or more of a lithium-cobalt oxide, a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, and modified compounds thereof, etc. Non-limiting examples of the lithium-cobalt oxide include LiCoO₂; non-limiting examples of the lithium-nickel oxide include LiNiO₂; non-limiting examples of the lithium-manganese oxide include LiMnO₂, LiMn₂O₄, etc.; and non-limiting examples of the lithium-nickel-cobalt-manganese oxide include LiNi_{1/3}Co_{1/3}Mn_{1/3}O₂ (or referred to as NCM₃₃₃ for short), LiNi_{0.5}Co_{0.2}Mn_{0.3}O₂ (or referred to as NCM₅₂₃ for short), LiNi_{0.5}Co_{0.25}Mn_{0.25}O₂ (or referred to as NCM₂₁₁ for short), LiNi_{0.6}Co_{0.2}Mn_{0.2}O₂ (or referred to as NCM₆₂₂ for short), LiNi_{0.8}Co_{0.1}Mn_{0.1}O₂ (or referred to as NCM₈₁₁ or NCM811 for short), etc. Non-limiting examples of the lithium-nickel-cobalt-aluminum oxide include LiNi_{0.80}Co_{0.15}Al_{0.05}O₂. Non-limiting examples of the lithium-containing phosphate with an olivine structure may include, but are not limited to, one or more of a lithium iron phosphate, a lithium iron phosphate-carbon composite material, a lithium manganese phosphate, a lithium manganese phosphate-carbon composite material, a lithium iron manganese phosphate, and a lithium iron manganese phosphate-carbon composite material. Non-limiting examples of the lithium iron phosphate include LiFePO₄ (or also referred to as LFP for short); and non-limiting examples of the lithium manganese phosphate include LiMnPO₄.

Taking battery cells and secondary batteries with active ions including lithium ions as an example, it can be understood the charging and discharging process of the batteries is accompanied with the deintercalation and depletion of lithium (Li), and the Li content in the positive electrode plate varies when the battery is discharged to different states. In the exemplary descriptions of the positive electrode active substance in the present application, unless otherwise specified, the Li content can be in the initial state of the material or a non-initial state after charge-discharge cycles. The positive electrode active substance is applied to the positive electrode plate in the battery system, and after charge-discharge cycles, the Li content of the positive electrode active substance contained in the positive electrode plate typically changes. The Li content may be measured in atomic mole content, but is not limited thereto. Regarding the "the Li content is the initial state of the material", the initial state of the material refers to the state of the material before introduced into the positive electrode slurry. It can be understood that new materials or new substances obtained by appropriate modification on the basis of the listed positive electrode active substances also fall within the scope of positive electrode active substances, such appropriate modification refers to an acceptable modification manner for the positive electrode active substance, and the non-limiting examples of the modification manner include cladding modifications.

In the exemplary descriptions about the positive electrode active substance in the present application, the oxygen (O) content is only a theoretical state value, and oxygen release from the lattices will cause the atomic mole content of oxygen to change, so the actual O content may fluctuate. The O content may be measured in atomic mole content, but is not limited thereto.

In some embodiments, the positive electrode active material layer optionally includes a binder. As a non-limiting example, the binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluoroacrylate resin. Generally, the weight percentage of the binder in the positive electrode active material layer can be 0-10 wt%, further 0-8 wt%, and further 1 wt%-5 wt% based on the total weight of the positive electrode active material layer.

In some embodiments, the positive electrode active material layer optionally includes a conductive agent. As a non-limiting example, the conductive agent may include one or more of superconducting carbon, acetylene black, carbon black, Ketjen black, carbon dot, a carbon nanotube, graphene, and a carbon nanofiber. Generally, the weight percentage of the conductive agent in the positive electrode active material layer can be 0-10 wt%, further 0-8 wt%, and further 0-5 wt% based on the total weight of the positive electrode active material layer.

In some embodiments, the positive electrode plate can be prepared by the following manner: dispersing the aforementioned components for preparing the positive electrode plate, e.g., the positive electrode active substance, the conductive agent, the binder and any other components in a solvent to form a positive electrode slurry; and coating the positive electrode slurry on at least one side surface of a positive electrode current collector, followed by oven drying, pressing (such as cold pressing) and the like procedures, to obtain the positive electrode plate. The type of the solvent may be selected from, but is not limited to, any one in the above embodiments, such as N-methylpyrrolidone (NMP). The positive electrode slurry may be coated on a single surface of the positive electrode current collector or on both surfaces of the positive electrode current collector. The solid content of the positive electrode slurry may be 40 wt%-80 wt%. The viscosity of the positive electrode slurry at room temperature may be 5,000 mPa·s-25,000 mPa·s. When the positive electrode slurry is coated, the unit face density (on one side) of the coating may be 130 g/m²-400 g/m² based on dry weight. The compaction density of the positive electrode plate can be 3.0 g/cm³-3.6 g/cm³, and optionally 3.3 g/cm³-3.5 g/cm³.

The "compaction density" referred in the present application has a meaning well-known in the art and is one of the reference indicators of the material energy density. In the present application, unless otherwise specified, the compaction density of the electrode plate refers to the ratio of the mass of the electrode active material layer to its volume. The compacted density of the positive electrode plate refers to a ratio of the mass of the positive electrode active material layer to its volume, and the compacted density of the negative electrode plate refers to a ratio of the mass of the negative electrode active material layer to its volume. In the present application, unless otherwise stated, for both positive and negative electrode plates, the change in electrode plate area before and after cold pressing is not significant, and the corresponding formula for calculating the compaction density can be:
Compaction density = coating face density/ thickness of electrode active material layer.
Coating face density = dry weight of slurry/ area of electrode active material layer.

The double-sided thickness of the electrode active material layer corresponds to the sum of the coating surface densities on both sides, while the single-sided thickness corresponds to the coating surface density on one side; and if the electrode active material layers on both sides of the current collector are basically the same, it can be calculated using the following formula: compaction density = single-sided coating surface density/ single-sided thickness of electrode active material layer.

The "single side" and "both sides" of the electrode active material layer refers to a position distribution manner relative to the current collector.

The following are some descriptions of the negative electrode plate.

The negative electrode plate in the secondary battery provided by the present application includes a negative electrode active material layer, and the negative electrode active material layer includes a negative electrode active substance.

A negative electrode active substance for a battery well known in the art may be used as the negative electrode active substance. As a non-limiting example, the negative electrode active substance may include at least one of the following materials: artificial graphite, natural graphite, soft carbon, hard carbon, a silicon-based material, a tin-based material, lithium titanate, etc. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials. Other traditional materials that can be used as negative electrode active substances for batteries may also be used. Only one of these negative electrode active substances may be used alone, or more than two thereof may be used in combination.

Without limitation, the weight percentage of the negative electrode active substance in the negative electrode active material layer may be greater than or equal to 80 wt%, and further greater than or equal to 90 wt%.

In some embodiments, the negative electrode active substance includes one or more of a carbon-based material, a silicon-based material, a tin-based material, lithium titanate and a modified form of any of the foregoing materials, wherein the modified form includes one or more of doping modification and cladding modification. Both doping and cladding modification manners can adopt or refer to existing modification manners in the art, including but not limited to the selection of element types and doping amounts. The carbon-based material may include, but is not limited to, one or more of a graphite material, soft carbon, hard carbon, and the like. The graphite material may include one or more of artificial graphite and natural graphite.

In some embodiments, the negative electrode active substance includes a carbon-based material and a silicon-based material. Without limitation, the percentage of the total mass of the carbon-based material and the silicon-based material in the total mass of the negative electrode active substance can be ≥ 80%, optionally ≥ 90%, further optionally ≥ 95%, still further optionally ≥ 96%, and still yet further optionally ≥ 100%, etc. The percentage of the total mass of the graphite material and the silicon-based material in the total mass of the negative electrode active substance can also be any one of the following percentages, or greater than or equal to any of the following percentages and less than or equal to 100%, or selected from an interval composed of any two of the following percentages: 80%, 82%, 83%, 84%, 85%, 86%, 88%, 90%, 92%, 94%, 95%, 96%, 98%, etc. The definition of the carbon-based material can be found in the previous text. For example, the carbon-based material can be a graphite material. The content of the carbon-based material can also be found in any suitable embodiment within the context. Without limitation, the weight proportion of the silicon-based material in the negative electrode active substance may be 0-40 wt%, further optionally 0-25 wt%, and even further optionally 3 wt%-25 wt%. Without limitation, the weight proportion of the silicon element in the negative electrode active substance may be 0-40 wt%, further optionally 0-25 wt%, and even further optionally 3 wt%-25 wt%. Without limitation, the weight proportion of the silicon-based material or silicon element in the negative electrode active substance can be any of the following percentages or an interval defined by any two of the following percentages: 0 wt%, 1 wt%, 2 wt%, 3 wt%, 5 wt%, 6 wt%, 8 wt%, 10 wt%, 12 wt%, 14 wt%, 15 wt%, 16 wt%, 18 wt%, 20 wt%, 25 wt%, 30 wt%, 35 wt%, 40wt%, etc.

In some embodiments, the negative electrode active substance includes a carbon-based material. Without limitation, the mass percentage of the carbon-based material in the negative electrode active substance can be ≥ 80%, optionally ≥ 90%, further optionally ≥ 95%, still further optionally ≥ 96%, and still yet further optionally ≥ 100%, etc. The mass percentage of the carbon-based material in the negative electrode active material can also be any one of the following percentages, or greater than or equal to any of the following percentages and less than or equal to 100%, or selected from an interval composed of any two of the following percentages: 80%, 82%, 83%, 84%, 85%, 86%, 88%, 90%, 92%, 94%, 95%, 96%, 98%, etc. The definition of the carbon-based material can be found in the previous text. For example, the carbon-based material can be a graphite material.

In some embodiments, the negative electrode plate includes a negative electrode current collector and a negative electrode active material layer disposed on at least one surface of the negative electrode current collector, and the negative electrode active material layer includes a negative electrode active substance. The negative electrode active substance may be as defined above.

As a non-limiting example, the negative electrode current collector has two opposite surfaces in its own thickness direction, and the negative electrode active material layer is disposed on either or both of the two opposite surfaces of the negative electrode current collector.

In some embodiments, a metal foil or a composite current collector can be employed as the negative electrode current collector. For example, a copper foil can be employed as the metal foil. In the negative electrode current collector, the composite current collector may include a polymer material base layer and a metal layer formed on at least one surface of the polymer material base layer; and the composite current collector may be obtained by forming a metal material on the polymer material base layer. In the negative electrode current collector, non-limiting examples of the metal material can include one or more of copper, copper alloy, nickel, nickel alloy, titanium, titanium alloy, silver and silver alloy, etc. In the negative electrode current collector, non-limiting examples of the polymer material base layer can include one or more of polypropylene (PP), polyethylene terephthalate (PET), polybutylene terephthalate (PBT), polystyrene (PS), polyethylene (PE), etc.

In some embodiments, the negative electrode active material layer optionally includes a binder. As a non-limiting example, the binder can include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). Without limitation, the weight proportion of the binder in the negative electrode active material layer can be 0-10 wt%, further 0-5 wt%, even further 1-5 wt%, and even further optionally 1 wt%-3 wt%.

In some embodiments, the negative electrode active material layer optionally includes a conductive agent. The conductive agent may include one or more of superconducting carbon, acetylene black, carbon black, Ketjen black, carbon dot, a carbon nanotube, graphene, and a carbon nanofiber. Without limitation, the weight percentage of the conductive agent in the negative electrode active material layer may be 0-15 wt%, further optionally 0-10 wt%, and still further optionally 0-5 wt%.

In some embodiments, the negative electrode active material layer further optionally includes other adjuvants, such as a thickener. Non-limiting examples of the thickener may include sodium carboxymethyl cellulose (CMC-Na), etc. The weight percentage of other adjuvants in the negative electrode active material layer can be 0-15 wt%, further optionally 0-10 wt%, still further optionally 0-5 wt%, still further optionally 0-3 wt%, and still further optionally 0-2 wt%.

In some embodiments, the negative electrode plate can be prepared by the following manners: dispersing the aforementioned components for preparing the negative electrode plate, e.g., the negative electrode active substance, the conductive agent, the binder and any other components in a solvent (e.g. deionized water as a non-limiting example of the solvent) to form a negative electrode slurry; and coating the negative electrode slurry on at least one side surface of a negative electrode current collector, followed by oven drying, pressing (such as cold pressing) and the like procedures, to obtain the negative electrode plate. The surface of the negative electrode current collector on which the negative electrode slurry is coated may be a single surface of the negative electrode current collector, or may be both surfaces of the negative electrode current collector. The solid content of the negative electrode slurry can be 30 wt%-70 wt%, and optionally 40 wt%-60 wt%. The viscosity of the negative electrode slurry at room temperature can be 2,000 mPa•s-10,000 mPa•s, and optionally 3,000 mPa•s-10,000 mPa•s. When the negative electrode slurry is coated, the unit face density (on one side) of the coating may be 35 g/m²-150 g/m² based on dry weight. The compaction density of the negative electrode plate can be 1.0 g/cm³-2.0 g/cm³, and optionally 1.0 g/cm³-1.8 g/cm³.

The following are some descriptions of the separator.

In some embodiments, the secondary battery further includes a separator. The type of the separator is not particularly limited in the present application, and any well-known porous-structured separator having good chemical stability and mechanical stability may be selected.

In some embodiments, the material of the separator may be one or more of glass fiber, nonwoven cloth, polyethylene, polypropylene, and polyvinylidene fluoride. The separator may be a monolayer film, or may be a multi-layer composite film, which is not particularly limited. When the separator is a multi-layer composite film, the material of each layer may be the same or different, with no particular limitation.

In some embodiments, the thickness of the separator is 6 µm- 40 µm, and optionally 12 µm-20 µm.

The following are some descriptions of the electrode assembly, the electrochemical energy storage apparatus, and the secondary battery.

In some embodiments, the positive electrode plate, the negative electrode plate, and the separator may be formed into an electrode assembly through a winding process or a lamination process.

In some embodiments, the electrochemical energy storage apparatus may include an outer package. The outer package may be used for encapsulating the electrode assembly and gel electrolyte precursor solution described above.

In some embodiments, the secondary battery can include an outer package. The outer package may be used for encapsulating the electrode assembly and gel electrolyte precursor solution described above.

In some embodiments, the secondary battery is a lithium-ion secondary battery.

In some embodiments, the secondary battery is a lithium-ion secondary battery, the positive electrode active material includes a lithium-ion active substance; and further, the electrolyte salt may include a lithium electrolyte salt.

In some embodiments, the outer package of the secondary battery may be a hard shell, e.g. a hard plastic shell, an aluminum shell, a steel shell, etc. The outer package of the secondary battery may also be a pouch, such as a bag-type pouch. The material of the pouch may be plastic, and further, non-limiting examples of the plastic may include one or more of polypropylene, polybutylene terephthalate, polybutylene succinate, and the like.

The secondary battery includes at least one battery cell. The secondary battery may include one or more battery cells.

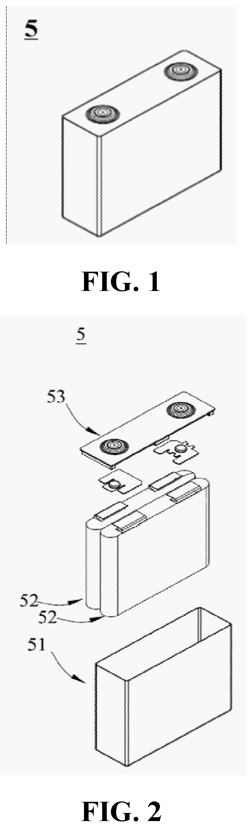

There is no special limitation on the shape of the battery cell in the present application, and the shape of the battery cell can be cylindrical, square or any other shape. For example, FIG. 1 shows a battery cell 5 with a square structure as an example.

In some embodiments, referring to FIG. 2, the outer package can include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 may cover the opening to close the accommodating cavity. The positive electrode plate, the negative electrode plate and the separator may be formed into an electrode assembly 52 by a winding process or a stacking process. The electrode assembly 52 is encapsulated within the accommodating cavity. The electrode assembly 52 is impregnated with the gel electrolyte precursor solution. The number of the electrode assemblies 52 contained in the battery cell 5 may be one or more, which can be selected by those skilled in the art according to actual needs.

The secondary battery may be a battery module 4 or a battery pack 1.

The battery module includes at least one battery cell. The number of battery cells comprised in the battery module may be one or more, and those skilled in the art may select an appropriate number according to the application and capacity of the battery module.

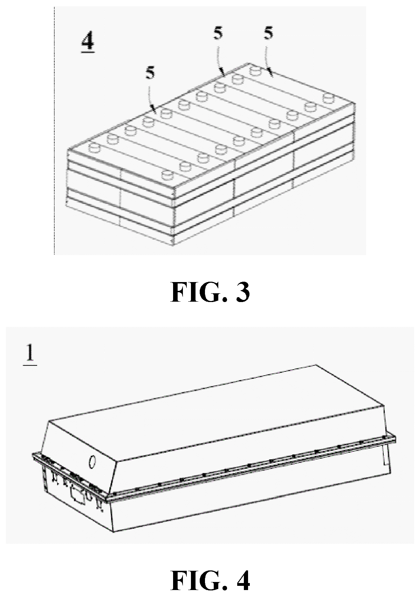

FIG. 3 shows a battery module 4 as an example. Referring to FIG. 3, in the battery module 4, a plurality of battery cells 5 may be arranged sequentially along a length direction of the battery module 4. Of course, any other arrangement is also possible. Further, the plurality of battery cells 5 may be fixed by fasteners.

Optionally, the battery module 4 may further include a shell having an accommodation space in which the plurality of battery cells 5 are accommodated.

In some embodiments, the aforementioned battery modules can also be assembled into a battery pack, the number of the battery modules contained in the battery pack can be one or more, and the appropriate number can be selected by those skilled in the art according to the application and capacity of the battery pack.

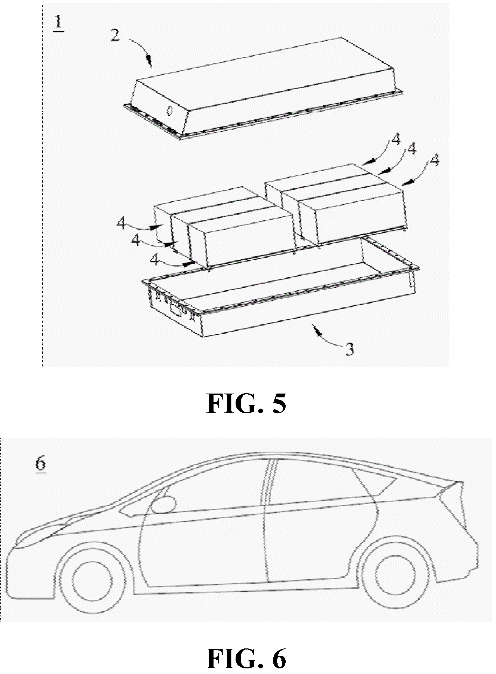

FIGs. 4 and 5 show a battery pack 1 as an example. Referring to FIGs. 4 and 5, the battery pack 1 can include a battery box and a plurality of battery modules 4 arranged in the battery box. The battery box includes an upper box 2 and a lower box 3, where the upper box 2 can cover the lower box 3 and forms an enclosed space for accommodating the battery module 4. The plurality of battery modules 4 can be arranged in the battery box in any way.

In a second aspect of the present application, a gel electrolyte precursor solution is provided, which includes the following components: a free radical polymerization system, a polymerization inhibitor, an electrolyte salt and an electrolyte solvent;
wherein the free radical polymerization system includes a polymeric monomer and an initiator, wherein the initiator is capable of initiating a free radical polymerization reaction of the polymeric monomer to form a crosslinked polymer; and the polymerization inhibitor includes a polymerization inhibition group capable of terminating the free radical polymerization reaction of the free radical polymerization system.

In the present application, unless otherwise stated, the "gel electrolyte precursor solution" refers to a liquid system that can form a gel electrolyte through a curing reaction. Unless otherwise stated, the curing reaction is a reaction in which polymeric monomers form a crosslinked polymer through free radical polymerization. After the curing reaction, the gel electrolyte precursor solution changes from a liquid state to a gel state to form a gel electrolyte. Therefore, the curing reaction is also called a crosslinking reaction or a gelation reaction, and the gel electrolyte precursor solution can be used as a gelation reaction system. Accordingly, the electrolyte lithium salt in the gel electrolyte precursor solution is converted into the electrolyte lithium salt in the gel electrolyte included in the secondary battery.

In the present application, unless otherwise stated, the "free radical polymerization system" refers to the raw material system used for forming the crosslinked polymer portion in the gel electrolyte, which typically at least includes a polymeric monomer and an initiator. The definition of "polymeric monomer" can be found in the previous text. Unless otherwise specified, the "initiator" in a free radical polymerization system can initiate the free radical polymerization reaction of the polymeric monomer, thereby converting the polymeric monomer into a crosslinked polymer. After the curing reaction of the gel electrolyte precursor solution, the crosslinked polymer constitutes the gel skeleton of the gel electrolyte.

The definitions of the "polymerization inhibitor" and the "polymerization inhibition group" can be found in the previous text.

The definition of "electrolyte salt" can be found in the context of the present application, including the first aspect of the present application.

In some embodiments, at 45°C, the polymerization inhibitor inhibits the polymerization of the free radical polymerization system for a time of greater than or equal to 1,200 min (20 h); and optionally, the polymerization inhibition time is greater than or equal to 2 days (48 h). Unless otherwise specified, the test pressure is 5 kPa.

In the present application, unless otherwise specified, the "test pressure" refers to the pressure of the environment in which the free radical polymerization system is located during the test. The test pressure is used for simulating the negative pressure formed by vacuuming after injecting the gel electrolyte precursor solution into the dry cell and before encapsulation.

Those skilled in the art can place the "gel electrolyte precursor solution" at a certain temperature (e.g. the infiltration temperature or formation temperature) for a certain period of time, and determine whether the "polymerization inhibitor has a polymerization inhibitory effect during the test" according to the change in the viscosity of the system.

Judgment method: when the viscosity growth rate (Rη) of the system is less than or equal to 20%, it can be considered that the polymerization inhibitor is still effective in polymerization inhibition of the free radical polymerization system. It can be understood that when the system exhibits a significant viscosity change or a distinct non-flowing gel phase, the polymerization inhibition effect of the polymerization inhibitor can be considered to be failed.

In the present application, unless otherwise specified, the viscosity of the liquid phase system (which may be a gel electrolyte precursor solution) can be tested using conventional methods in the art. It can be determined using instruments and methods known in the art, for example can be tested with reference to the national standard GB/T10247-2008 "Viscosity Measurement Methods" or based on the rotational viscometer described in Appendix D of the national standard GB/T10247-2008.

Unless otherwise specified, the viscosity of the liquid phase system (which may be a gel electrolyte precursor solution) can be tested using the following method: taking and placing a certain mass of the sample to be tested in a sample container, and testing with a rotary viscometer with the instrument model of DV2TLV produced by Brookfield. A shear force exerted on a rotor as it rotates continuously at a constant speed in a sample at 25°C causes a spring to generate a torque that is proportional to the viscosity, so as to obtain a viscosity value. The testing device satisfies the following testing environment conditions: 1. external environment of the device: temperature: 25°C, humidity: RH < 80%; 2. internal environment of the device: 2/3 of the sample container is immersed in the water bath pot, the medium is water, which is used for keeping the sample at a constant temperature.

Acquisition of the sample to be tested: the formulated gel electrolyte precursor solution to be tested is tested for its initial viscosity η0; the gel electrolyte precursor solution to be tested is encapsulated under a negative pressure of 5 kPa, and then kept at 45°C for 1,200 min, and then cooled to 25°C to test the viscosity η1. The viscosity increase ratio of the system Rη = (η1 - η0) / η0 × 100%.

Analysis method: When Rη ≤ 20%, it is considered whether the polymerization inhibitor has a polymerization inhibition effect during the test period (5kPa, kept at 45°C for 1,200 min), which can also be considered as satisfying "at 45°C, the polymerization inhibition time of the polymerization inhibitor against the free radical polymerization system is greater than or equal to 1,200 min (20 h)".

In some embodiments, at 70°C, the initiator is capable of initiating the free radical polymerization of the free radical polymerization system within 600 min. Unless otherwise specified, the test pressure is 5 kPa.

Judgment method: when the presence of the crosslinked polymer can be detected, it is considered that a free radical polymerization reaction has occurred in the free radical polymerization system.

In the present application, unless otherwise stated, the "whether the crosslinked polymer is generated" can be analyzed by at least one of the following methods: proton nuclear magnetic resonance spectroscopy (¹H NMR), gel permeation chromatography (GPC), and high performance liquid chromatography (HPLC). When the characteristic peak of the crosslinked polymer appears in proton nuclear magnetic resonance spectroscopy (¹H NMR) (such as the characteristic peak of the methylene hydrogen in -**C*H*₂**-C(CH₃)(COOCH₃)- of the methyl methacrylate system), and when polymer characteristic peaks other than monomers appear in the gel permeation chromatography (GPC) or high performance liquid chromatography (HPLC), it can be considered that "the crosslinked polymer has been generated," and further, it can be considered that "the free radical polymerization of the free radical polymerization system has occurred."

Reference can be made to the examples section hereafter. It will not be described in detail here anymore.

In the present application, unless otherwise specified, the "electrolyte solvent" in the gel electrolyte precursor solution can be used as a solvent for the electrolyte salt on one hand, and as a solvent for the polymeric monomer in the free radical polymerization system on the other hand. After the curing reaction of the gel electrolyte precursor solution, at least a portion of the electrolyte solvent constitutes the gelling solvent of the gel electrolyte (a small amount of volatilization may occur, or no volatilization is allowed), which is used for binding the electrolyte salt.

Without limitation, the molar concentration of the electrolyte salt in the gel electrolyte can be 0.5mol/L-5 mol/L, but is not limited thereto. The types of the electrolyte salt can be found in the context of the present application.

The aforementioned secondary battery including the gel electrolyte can be formed by infiltrating the electrode plate with the gel electrolyte precursor solution provided in the second aspect of the present application, performing formation, and curing.

The distribution uniformity of the gel electrolyte in the lateral direction can be analyzed by comparing the differences in the filling coefficients of the gel electrolyte at different lateral positions of the electrode plate, and the distribution uniformity of the gel electrolyte in the thickness direction of the electrode plate can be analyzed by comparing the differences in the filling coefficients of the gel electrolyte at different thickness positions of the electrode plate.

Regarding the distribution uniformity of the gel electrolyte in the lateral direction, the aforementioned method can be employed: selecting several local regions with a certain lateral area at different lateral positions of the electrode active material layer, continuously slicing the local region at the selected lateral position along the thickness direction of the electrode active material layer, and calculating the filling coefficient αᵢ = Vᵢ₁ / (Vᵢ × φᵢ) of the local region according to the three-dimensional reconstruction results; then comparing the degree of dispersion of the filling coefficient αᵢ of different local regions, and using the coefficient of variation to analyze the degree of dispersion of the filling coefficient αᵢ of different local regions. The coefficient of variation is equal to the ratio of the standard deviation to the mean. The coefficient of variation obtained by statistically analyzing multiple local regions at different lateral positions can be denoted as CVᵢ. The number of selected local regions can be 3 or more. The smaller the coefficient of variation CVᵢ, the lower the degree of dispersion, indicating that the gel electrolyte is more uniformly distributed in different lateral directions.

Similarly, regarding the distribution uniformity of the gel electrolyte along the thickness direction of the electrode plate, the aforementioned method can be referred: selecting a local region with a certain lateral area in the electrode active material layer, continuously slicing the selected local region along the thickness direction of the electrode active material layer to obtain layers of different thicknesses, and calculating the filling coefficients of the layers of different thicknesses in the local region αⱼ = Vⱼ₁ / (Vⱼ × φⱼ) according to the three-dimensional reconstruction results, where Vⱼ₁ is the volume of the gel electrolyte in a single thickness layer, Vᵢ is the volume of a single thickness layer, and φⱼ is the porosity of the single thickness layer; and then comparing the coefficient of variation (which can be denoted as CVⱼ) of the filling coefficients αⱼ for different thicknesses to characterize the dispersion degree of the filling coefficients for layers of different thicknesses. The number of the thickness layers may be 3 or more. The smaller the coefficient of variation CVⱼ, the lower the degree of dispersion, indicating that the gel electrolyte is more uniformly distributed in different thickness locations.

For the embodiments of secondary batteries prepared using the gel electrolyte precursor solution provided in the second aspect of the present application, the corresponding comparative examples will be obtained by only omitting the polymerization inhibitor in the gel electrolyte precursor solution based on the examples.

By comparing the CVᵢ of the examples and the comparative examples, and according to "the CVᵢ of the examples is less than the CVᵢ of the comparative examples", it can be confirmed that by setting a polymerization inhibitor in the gel electrolyte precursor solution, the distribution uniformity of the gel electrolyte at different lateral positions of the electrode plates in the secondary battery is improved. The coefficient of variation CVᵢ of the positive electrode plate can be denoted as CV_{Pi}, and the coefficient of variation CVᵢ of the negative electrode plate can be denoted as CV_{Ni}.

By comparing the CVⱼ of the examples and the comparative examples, and according to "the CVⱼ of the examples is less than the CVⱼ of the comparative examples", it can be confirmed that by setting a polymerization inhibitor in the gel electrolyte precursor solution, the distribution uniformity of the gel electrolyte at different thickness positions of the electrode plates in the secondary battery is improved. The coefficient of variation CVⱼ of the positive electrode plate can be denoted as CV_{Pj}, and the coefficient of variation CVⱼ of the negative electrode plate can be denoted as CV_{Nj}.

It can be understood that the positive electrode plate of the examples is compared with the positive electrode plate of the comparative examples, and the negative electrode plate of the examples is compared with the negative electrode plate of the examples. It can also be understood that the positive or negative electrode plates at similar positions of the electrode assemblies in the examples and comparative examples can be selected for analysis. For example, the innermost, outermost, and middle positions of the electrode assembly can be selected respectively for analysis.

Furthermore, the gel electrolyte precursor solution provided in the second aspect of the present application is denoted as the "example precursor solution", and the precursor solution corresponding to omission of the polymerization inhibitor on the basis of the example precursor solution is denoted as a "control precursor solution". the example precursor solution and the control precursor solution are drawn with different capillaries respectively. The capillaries are disposed on the surface of the electrode plate, and the descent speeds of the example precursor solution and the control precursor solution are compared, which can reflect the infiltration of the precursor solutions on the electrode plate. The faster the descent speed, the better the infiltration of the precursor solutions on the electrode plate. Illustratively, the differences in infiltration of the positive electrode plate and the differences in infiltration of the negative electrode plate can be compared using the positive electrode plate and negative electrode plate as described in Example 1 hereafter, respectively.

The gel electrolyte precursor solution provided in the second aspect of the present application has improved infiltration on both the positive and negative electrode plates compared to the precursor solution without added polymerization inhibitor.

In some embodiments, the mass percentage of the polymeric monomer in the gel electrolyte precursor solution can be, but is not limited to, 2%-15%, and optionally 8%-12%, or any of the following percentages or an interval formed by any two of the following percentages: 2%, 3%, 4%, 5%, 6%, 7%, 8%, 9%, 10%, 11%, 12%, 13%, 14%, 15%, etc.

In some embodiments, the mass fraction of the polymerization inhibitor in the gel electrolyte precursor solution can be, but is not limited to, 50 ppm-2,000 ppm, optionally 500 ppm-1,000 ppm, or any of the following mass fractions or an interval formed by any two of the following mass fractions: 50 ppm, 150 ppm, 200 ppm, 250 ppm, 300 ppm, 400 ppm, 500 ppm, 600 ppm, 800 ppm, 1,000 ppm, 1,200 ppm, 1,400 ppm, 1,500 ppm, 1,600 ppm, 1,800 ppm, 2,000 ppm, etc.

In some embodiments, the gel electrolyte precursor solution satisfies one or more of the following features (any numerical parameter in the following features can also be selected from any suitable value or range in the context):
a mass percentage of the polymeric monomer in the gel electrolyte precursor solution is 2%-15%, and optionally 8%-12%; and
a mass fraction of the polymerization inhibitor in the gel electrolyte precursor solution is 50 ppm-2,000 ppm, and optionally 500 ppm-1,000 ppm.

By adjusting the mass percentage of the polymeric monomer in the gel electrolyte precursor solution within the aforementioned range, it is beneficial to provide a more stable gelling structure while also taking into account the ability to transport active ions.

Adjusting the mass fraction of the polymerization inhibitor in the gel electrolyte precursor solution helps to provide a sufficient polymerization inhibition effect while reducing the added amount as much as possible.

In some embodiments, the polymerization inhibitor includes a phenolic polymerization inhibitor. As defined above, the phenolic polymerization inhibitor includes an aromatic ring and phenolic hydroxyl group directly bonded to the aromatic ring. In a molecule of a phenolic polymerization inhibitor, the polymerization inhibition group may include one or more phenolic hydroxyl groups. The definition described above can also be found in the previous text.

In some embodiments, the phenolic polymerization inhibitor contains 1-5 phenolic hydroxyl groups in one molecule, for example, 1, 2, 3, 4 or 5, further, 1, 2 or 3, and even further, 1 or 2.

In some embodiments, in a molecule, the mass proportion of the phenolic hydroxyl group in the phenolic polymerization inhibitor can be, but is not limited to 7.5%-40.5%, and is optionally 8%-35%, and can be any one of the following percentages or selected from an interval formed by any two of the following percentages: 7.5%, 8%, 10%, 12%, 14%, 15%, 16%, 18%, 20%, 22%, 24%, 25%, 28%, 30%, 32%, 34%, 35%, 36%, 38%, 40%, 40.5%, etc.

By controlling one or both of the parameters-the number of phenolic hydroxyl groups in the phenolic polymerization inhibitor and the mass proportion of phenolic hydroxyl groups in the phenolic polymerization inhibitor-within the aforementioned range, the polymerization inhibition time and efficiency can be adjusted, and a more sufficient polymerization inhibition effect can be achieved with a more suitable dosage of the phenolic polymerization inhibitor.

In some embodiments, in one molecule, the phenolic polymerization inhibitor contains one or more, and optionally 1 or 2 aromatic rings. When there are multiple aromatic rings, adjacent aromatic rings are connected by chemical bonds or -C(R₁R₂)-, where R₁ and R₂ are each independently H or C₁₋₄ alkyl, and optionally each independently H or C₁₋₃ alkyl, further independently optionally H, methyl, ethyl or propyl, even further independently optionally H, methyl or ethyl, and even further independently optionally H or methyl. In some embodiments, R₁ and R₂ are each independently H, methyl, ethyl, propyl or butyl, and further independently H, methyl, ethyl, n-propyl or n-butyl, and even further independently H, methyl, ethyl or n-propyl. In some embodiments, R₁ and R₂ are the same. In some embodiments, R₁ and R₂ are both H, methyl, ethyl or n-propyl, and may further be H, methyl or ethyl, and may even further be methyl. In some embodiments, -C(R₁R₂)- is CH(CH₃)-, -CH(CH₂CH₃)- or -CH(CH₂CH₂CH₃)-. In some embodiments, -C(R₁R₂)- is -CH(CH₂CH₂CH₃)-. In some embodiments, -C(R₁R₂)- is -C(CH₃)₂- or -CH(CH₂CH₂CH₃)-.

In some embodiments, -C(R₁R₂)- has 1-4 carbon atoms.

In some embodiments, the phenolic polymerization inhibitor contains 1 or 2 aromatic rings; when there are multiple aromatic rings, adjacent aromatic rings are connected by a chemical bond or -C(R₁R₂)-, wherein R₁ and R₂ are each independently H or C₁₋₃ alkyl; and -C(R₁R₂)- has 1-4 carbon atoms.

The number of sites for introducing phenolic hydroxyl groups can be adjusted by controlling the number of aromatic rings.

In some embodiments, the molecular weight of the phenolic polymerization inhibitor is less than or equal to 1,000 Da, and optionally less than or equal to 500 Da, and may also be any of the following molecular weights or an interval formed by any two of the following percentages: 94 Da, 100 Da, 150 Da, 160 Da, 180 Da, 200 Da, 250 Da, 300 Da, 400 Da, 500 Da, 600 Da, 700 Da, 750 Da, 800 Da, 900 Da, 1,000 Da, etc.

By controlling the molecular weight of the phenolic polymerization inhibitor within the aforementioned range, it is beneficial to reduce a steric hindrance effect, thereby making it more conducive to the polymerization inhibition effect of the polymerization inhibition groups.

In some embodiments, the phenolic polymerization inhibitor satisfies one or more of the following features (any numerical parameter in the following features can also be selected from any suitable value or range in the context):
in one molecule, the phenolic polymerization inhibitor contains 1-5, and optionally 1, 2 or 3 phenolic hydroxyl groups;
in one molecule, the phenolic hydroxyl group accounts for 7.5%-40.5%, and optionally 8%-35% by mass in the phenolic polymerization inhibitor;
in a molecule, the phenolic polymerization inhibitor contains one or more, and optionally 1 or 2 aromatic rings; when there are multiple aromatic rings, adjacent aromatic rings are connected by a chemical bond or -C(R₁R₂)-, wherein R₁ and R₂ are each independently H or C₁₋₄ alkyl, and may be independently H or C₁₋₃ alkyl, and further independently, -C(R₁R₂)- has 1 to 4 carbon atoms; and
the molecular weight of the phenolic polymerization inhibitor is less than or equal to 1,000 Da, and optionally less than or equal to 500 Da.

In some embodiments, any aromatic ring of the phenolic polymerization inhibitor is independently connected to 0, 1 or more (optionally 2-5, further optionally 2, 3, 4 or 5, further optionally 2 or 3, and further optionally 2) non-hydroxyl substituents selected from the group consisting of halogen, nitro, C₁₋₄ alkyl (optionally methyl, ethyl, propyl or butyl, and further optionally methyl or tert-butyl) and C₁₋₃alkoxy (optionally methoxy, ethoxy or propoxy, and further optionally methoxy). The halogen can be selected from one or more of fluorine, chlorine and bromine. In some embodiments, the halogen is bromine.

In some embodiments, any aromatic ring of the phenolic polymerization inhibitor is independently connected to 0, 1 or more (optionally 2-5, further optionally 2, 3, 4 or 5, further optionally 2 or 3, and further optionally 2) non-hydroxyl substituents selected from the group consisting of halogen and a nitro group; and the halogen is selected from one or more of fluorine, chlorine and bromine, and optionally bromine.

In some embodiments, the number of substituents linked to any aromatic ring in the phenolic polymerization inhibitor is 0-5, and optionally 0, 1, 2, 3, 4 or 5.

In the present application, unless otherwise specified, "the number of non-hydroxyl substituents connected to any aromatic ring in a phenolic polymerization inhibitor" refers to the number of non-hydroxyl substituents other than the "phenolic hydroxyl group".

Without limitation, the phenolic polymerization inhibitor may include, but is not limited to one or more of the following compounds: one or more of phenol, 2,6-di-tert-butylphenol, p-methoxyphenol, 2,6-di-tert-butyl-4-methylphenol, hydroquinone, catechol, 2-nitrohydroquinone, monomethyl hydroquinone, trimethyl hydroquinone, p-tert-butylcatechol, 2,5-di-tert-butylhydroquinone, bisphenol A, 4,4'-dihydroxybiphenyl, 4,4'-butylidene bis(6-tert-butyl-3-methylphenol), benzenetriol and 4-bromophenol.

The polymerization inhibitor can be selected from commercially available polymerization inhibitors (such as phenolic polymerization inhibitors), or it can be synthesized using conventional organic chemical synthesis methods according to the structural design in the present application. Those skilled in the art can identify the structures of the polymerization inhibitor and a residue thereof by one or more of the following detection methods: Fourier transform infrared (FT-IR) spectroscopy, ultraviolet spectroscopy, a proton nuclear magnetic resonance (¹H NMR) method, X-ray diffraction (XRD), gel permeation chromatography (GPC), high-performance liquid chromatography (HPLC), mass spectrometry, single-crystal X-ray diffraction (SCXRD), inductively coupled plasma (ICP) spectroscopy, etc. Sample preparation methods and test methods for these test methods are known to those skilled in the art, and test parameters can be appropriately adjusted according to the specific structures and material properties of the compounds.

In some embodiments, the mass ratio of the initiator to the polymeric monomer may be, but is not limited to, 0.5%-10%, and optionally 0.5%-5%, and can be any one of the following percentages or selected from an interval formed by any two of the following percentages: 0.5%, 0.6%, 0.8%, 1%, 1.5%, 1.6%, 1.8%, 2%, 2.5%, 3%, 3.5%, 4%, 5%, 6%, 7%, 7.5%, 8%, 9%, 10%, etc.

In some embodiments, the mass ratio of the polymerization inhibitor to the initiator may be, but is not limited to, 0.1%-15%, and optionally 0.1%-20%, and can also be any of the following percentages or an interval formed by any two of the following percentages: 0.1%, 0.2%, 0.25%, 0.3%, 0.4%, 0.5%, 0.6%, 0.8%, 1%, 1.5%, 1.6%, 1.8%, 2%, 2.5%, 3%, 3.5%, 4%, 5%, 6%, 7%, 7.5%, 8%, 9%, 10%, 12%, 15%, 16%, 18%, 20%, 25%, 30%, 35%, 40%, 45%, 50%, etc. The mass ratio of the polymerization inhibitor to the initiator can also be selected from the following ranges: 0.1%-30%, 0.25%-30%, 0.25%-20%, 0.5%-20%, etc.

In some embodiments, the mass ratio of the polymerization inhibition group in the polymerization inhibitor to the initiator may be, but is not limited to, 0.01%-15%, and optionally 0.05%-5%, and can also be any of the following percentages or an interval formed by any two of the following percentages: 0.01%, 0.02%, 0.04%, 0.05%, 0.06%, 0.08%, 0.1%, 0.12%, 0.15%, 0.16%, 0.18%, 0.2%, 0.25%, 0.3%, 0.4%, 0.5%, 0.6%, 0.8%, 1%, 1.5%, 1.6%, 1.8%, 2%, 2.5%, 3%, 3.5%, 4%, 4.5%, 5%, 6%, 7%, 7.5%, 8%, 9%, 10%, 12%, 15%, etc. The mass ratio of the polymerization inhibition group in the polymerization inhibitor to the initiator can also be selected from the following ranges: 0.01%-8%, 0.05%-8%, etc.

In some embodiments, the gel electrolyte precursor solution satisfies one or more of the following features (any numerical parameter in the following features can also be selected from any suitable value or range in the context):
a mass ratio of the initiator to the polymeric monomer is 0.5%-10%, and optionally 0.5%-5%;
a mass ratio of the polymerization inhibitor to the initiator is 0.1%-50%, and optionally 0.1%-20%; and
a mass ratio of the polymerization inhibition group in the polymerization inhibitor to the initiator is 0.01%-15%, and optionally 0.05%-5%.

By controlling the mass ratio of the initiator to the polymeric monomer within the aforementioned range, it is beneficial to make the polymeric monomer fully react and participate in the gelling structure more fully.

By controlling one or both of the parameters-the mass ratio of the polymerization inhibitor to the initiator and the mass ratio of the polymerization inhibition group in the polymerization inhibitor to the initiator-within the aforementioned ranges, the polymerization inhibition effect of the polymerization inhibitor can be fully achieved before the curing reaction starts (including in the infiltrating and formation stages). It is also beneficial to control the introduced amount of byproducts and to fully utilize the initiation effect of the initiator. The polymerization inhibitor can be consumed as soon as possible during the curing reaction stage, thereby starting the curing reaction as soon as possible. It is also beneficial to reduce or avoid the residue of the polymeric monomer, thereby reducing the adverse effects on the electrochemistry of the battery as caused by the reaction of the residual monomer with the electrode.

In some embodiments, the polymeric monomer includes a polyene compound, and also include or does not include a monoene compound, wherein the polyene compound has multiple polymerizable carbon-carbon double bonds, and the monoene compound has one polymerizable carbon-carbon double bond.

In some embodiments, the polyene compound includes a structure of [CH₂=C(R₀₁)-]ₖU₁, wherein k is an integer greater than or equal to 2, and U₁ is a k-valent non-aromatic group or a k-valent aromatic group; and R₀₁ is independently H or methyl at each occurrence. Without limitation, k can be an integer selected from 2-6, and further can be 2, 3 or 4. In some embodiments, k is equal to 2. In some other embodiments, k is equal to 3. In some other embodiments, k is equal to 4. The definition of R₀₁ can be found above. In some embodiments, R₀₁ is H. In some other embodiments, R₀₁ is methyl.

In some embodiments, the U₁ has a structure of (-C(=O)-O-)ₖU₀ or (-O-)ₖU₀ or a k-valent aryl; wherein U₀ is connected to an adjacent oxygen atom via a carbon atom, and U₀ is a k-valent alkyl or a k-valent alkyl containing one or more ether groups.

In some embodiments, the k-valent aryl is k-valent phenyl. At this point, the polyene compound is k-valent phenyl.

In some embodiments, the structure of U₁ is (-C(=O)-O-)ₖU₀. In some embodiments, the polyene compound includes an acrylate polyene compound. In some embodiments, the terminal alkenyl group in the acrylate polyene compound constitutes part of the acrylate group, and may further constitute part of the acrylate group or methacrylate group.

In some embodiments, the structure of U₁ is (-O-)ₖU₀. In some embodiments, the polyene compound includes an ether polyene compound.

In the present application, unless otherwise specified, the "polyene compound" and the "polyene-based compound" have the same meaning and can be used interchangeably.

In some embodiments, the structure of U₁ is divalent phenyl. In some embodiments, the polyene compound includes divinylbenzene.

In the present application, unless otherwise specified, the "ether group" has the well-known meaning in the art, and refers to an oxy group (-O-) connected to two carbon atoms. Unless otherwise specified, the k terminal atoms of the "k-valent alkyl containing one or more ether groups" are all carbon atoms.

Without limitation, the polyene compound includes, but is not limited to one or more of ethylene glycol diacrylate, ethylene glycol dimethacrylate, polyethylene glycol diacrylate, polyethylene glycol dimethacrylate, 1,4-butanediol dimethacrylate, 1,6-hexanediol dimethacrylate, 1,4-butanediol diacrylate, glyceryl dimethacrylate, dimethyl 1,2-propylene glycol acrylate, 1,3-butanediol dimethacrylate, dipropylene glycol diacrylate, trimethylolpropane trimethylacrylate, trimethylolpropane triacrylate, glyceryl trimethylacrylate, triallyl trimesate, cyclohexanetriol trimethylacrylate, pentaerythritol triacrylate, pentaerythritol tetraacrylate and pentaerythritol tetramethylacrylate. The definition described above can also be found in the previous text.

In some embodiments, the polymeric monomer includes a monoene compound. without limitation, the monoene compound may include, but is not limited to one or more of CH₂=C(R₀)-R_{A}, 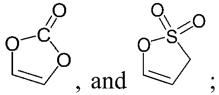 R₀ is H or methyl; R_{A} is -COOH, -C(=O)-O-R₃, -CH(-OR₄₁)(-OR₄₂), cyano, or phenyl; R₃ is C₁₋₆ alkyl, substituted C₁₋₆ alkyl, tri(C₁₋₆ hydrocarbyl)silyl, or tris(C₁₋₆ hydrocarbyloxy)silyl; R₄₁and R₄₂ are each independently C₁₋₃ alkyl (optionally methyl, ethyl, or propyl; further optionally methyl or ethyl; still further optionally); the C₁₋₆ alkyl in the substituted C₁₋₆ alkyl is substituted by one or more substituents selected from the group consisting of -OH, a halo group, epoxy, and cyano. Without limitation, the halo group can be fluorine, chlorine, or bromine, and optionally fluorine. The "C₁₋₆ alkyl" in the C₁₋₆ alkyl and the substituted C₁₋₆ alkyl involved in the R₃, can each be independently, but is not limited to, C₁₋₄alkyl, and optionally C₁₋₃ alkyl, and may also be methyl, ethyl or propyl. The "C₁₋₆ hydrocarbyl" in tris(C₁₋₆hydrocarbyl)silyl can be, but is not limited to, C₁₋₆alkyl, further can be C₁₋₄ alkyl, and even further can be C₁₋₃ alkyl, and can also be methyl, ethyl or propyl. The "C₁₋₆ hydrocarbyloxy" in the tri(C₁₋₆ hydrocarbyloxy)silyl can be, but is not limited to, "C₁₋₆ alkoxy", and further optionally methoxy, ethoxy or propoxy, and still further optionally methoxy.

In some embodiments, R₃ is C₁₋₆ alkyl, and may also be, but is not limited to, C₁₋₄ alkyl, and optionally C₁₋₃ alkyl, and may also be methyl, ethyl or propyl.

In some embodiments, R₀ is H. In some other embodiments, R₀ is methyl.

Without limitation, the monoene compound includes, but is not limited to one or more of styrene, vinylene carbonate, vinyl ethylene carbonate, methyl methacrylate, methyl acrylate, ethyl acrylate, acrylic acid, trimethylsilyl methacrylate, acrolein dimethyl acetal, acrolein diethyl acetal, 2-phenoxyethyl acrylate, 3-perfluorohexyl-2-hydroxypropyl acrylate, trifluoroethyl acrylate, trifluoroethyl methacrylate, acryl-1,3-sulfolactone, glycidyl methacrylate, acrylamide, (acryloyloxymethyl)dimethyl methoxysilane, cyanoethyl acrylate, hydroxyethyl acrylate, hydroxypropyl acrylate, 3-(perfluoro-3-methylbutyl) 2-hydroxypropyl acrylate, pentafluorophenol acrylate and acrylonitrile.

In some embodiments, the polymeric monomer is an ester compound. Without limitation, any ester structure in the ester compound can be independently methyl ester, ethyl ester, propyl ester, trifluoroethyl ester, trimethylsilyl ester, 2-phenoxyethyl ester, glycidyl ester, cyanoethyl ester, hydroxyethyl ester, hydroxypropyl ester or pentafluorophenol ester. In some embodiments, any ester structure in the ester compound may independently be one or more of methyl ester, ethyl ester, and propyl ester. In some embodiments, the ester structure in the ester compound is methyl ester.

Without limitation, the initiator may include, but is not limited to, one or more of an azo initiator and a peroxide initiator.

In some embodiments, the initiator includes an azo initiator. Without limitation, the azo initiator may include, but is not limited to, one or more of azodiisobutyronitrile, dimethyl azobisisobutyrate and azodiisoheptylnitrile.

In some embodiments, the initiator includes a peroxide initiator. Without limitation, the peroxide initiator includes, but is not limited to, one or more of didodecanoyl peroxide, dibenzoyl peroxide, bis(2,4-dichlorobenzoyl) peroxide, diacetyl peroxide, dioctanoyl peroxide, dilauroyl peroxide, peroxydicarbonate, diisopropyl peroxydicarbonate, diisobutyl peroxydicarbonate, dicyclohexyl peroxydicarbonate, and bis(p-tert-butylcyclohexyl) peroxydicarbonate.

In a third aspect of the present application, a method for preparing a secondary battery is provided, including the steps of:
S100: providing an electrode assembly located inside a case, wherein the electrode assembly includes a plurality of electrode plates and a separator, wherein the plurality of electrode plates include a positive electrode plate and a negative electrode plate, and the positive electrode plate and the negative electrode plate are isolated by the separator; and any one of the electrode plates independently includes an electrode active material layer;
S200: injecting the gel electrolyte precursor solution of the second aspect of the present application into the case, and keeping the temperature at an infiltration temperature T1 to allow the gel electrolyte precursor solution to infiltrate the plurality of electrode plates;
S300: performing formation at a formation temperature T2; and
S400: subjecting the gel electrolyte precursor solution to a free radical polymerization reaction at a curing temperature T3 to generate a gel electrolyte, and preparing the secondary battery of the first aspect of the present application; wherein the gel electrolyte includes a first gel electrolyte located inside the electrode active material layer and a second gel electrolyte located outside the plurality of electrode plates, and the first gel electrolyte and the second gel electrolyte each independently includes a crosslinked polymer formed by the polymeric monomer, a gelling solvent, and at least a part of the electrolyte salt, and the gelling solvent includes at least a part of the electrolyte solvent.

By utilizing the polymerization inhibition effect of the polymerization inhibitor contained in the gel electrolyte precursor solution, the curing reaction can be inhibited during the infiltrating and formation stages of the electrode plates, thereby controlling the occurrence time of the curing reaction. This can improve the infiltration effect of the gel electrolyte precursor solution on the interior of the electrode plate, promoting the full distribution of the gel electrolyte precursor solution inside the electrode plate. It also facilitates the full contact and infiltrating between the precursor solution and the electrode active particles, and optimizes the transport channels of active ions, thereby promoting the capacity utilization of the positive electrode plate, the negative electrode plate, and the battery cell. Furthermore, it helps to suppress the lithium plating problem at the negative electrode interface and improve the cycling performance of the battery.

In some embodiments, the electrolyte salt in the gel electrolyte precursor solution includes an electrolyte lithium salt.

In some embodiments, the curing temperature T3 is higher than the infiltration temperature T1.

In some embodiments, the curing temperature T3 is higher than the formation temperature T2.

In some embodiments, the infiltration temperature T1 is 10°C-60°C, optionally 20°C-60°C, further optionally 40°C-60°C, and may also be any one of the following temperatures or an interval formed by any two of the following temperatures: 10°C, 15°C, 20°C, 30°C, 40°C, 50°C, 60°C, etc. Without limitation, in the step of keeping the gel electrolyte precursor solution at the infiltration temperature T1 to infiltrate multiple electrode plates, the holding time can be 24 h-48 h, or can also be any of the following durations or an interval formed by any two of the following durations: 24 h, 28 h, 30 h, 32 h, 35 h, 36 h, 40 h, 45 h, 48 h, etc.

In some embodiments, the formation temperature T2 is 40°C-60°C, and may also be any one of the following temperatures or an interval formed by any two of the following temperatures: 40°C, 45°C, 50°C, 55°C, 60°C, etc.

In some embodiments, the curing temperature T3 is 50°C-80°C, and optionally 60°C-80°C, and may also be any one of the following temperatures or an interval formed by any two of the following temperatures: 50°C, 55°C, 60°C, 65°C, 70°C, 75°C, 80°C, etc.

In some embodiments, in the step of generating the gel electrolyte by free radical polymerization of the gel electrolyte precursor solution at the curing temperature T3, the reaction time for the free radical polymerization is 3 h-8 h, and can also be any of the following durations or an interval formed by any two of the following durations: 3 h, 4 h, 5 h, 6 h, 7 h, 8 h, etc.

In some embodiments, the infiltration temperature T1 and the formation temperature T2 are each 45°C, and the curing temperature is 70°C.

In some embodiments, the secondary battery of the first aspect of the present application is prepared.

In a further aspect of the present application, a secondary battery is provided, which is the secondary battery according to the first aspect of the present application, or a secondary battery prepared by the method for preparing a secondary battery according to the third aspect of the present application, wherein the secondary battery is a lithium-ion secondary battery.

In a fourth aspect of the present application, an electrical apparatus is provided, which includes at least one of the secondary battery according to the first aspect of the present application and the secondary battery prepared by the method for preparing a secondary battery according to the third aspect of the present application.

In some embodiments, the present application further provides an electrical apparatus including the secondary battery in any of the embodiments provided by the present application. The secondary battery can be used as a power source for the electrical apparatus, or as an energy storage unit for the electrical apparatus. The electrical apparatus can include a mobile device, an electric vehicle, an electric train, a ship, a satellite, and an energy storage system, but is not limited thereto. The mobile devices can, for example, be smartphones, and laptops; the electric vehicles can, for example, be pure electric vehicles, hybrid electric vehicles, plug-in hybrid electric vehicles, electric bicycles, electric scooters, electric golf carts, electric trucks, electric motorcycles, and electric tools, but are not limited thereto. The electrical apparatus can also be applied in military equipment, aerospace, and the like fields, and can also be applied in energy storage power systems for hydroelectric, thermal, wind, and solar power stations, etc.

As the electrical apparatus, the secondary battery may be selected according to the use requirements thereof.

FIG. 6 shows an electrical apparatus 6 as an example. The electrical apparatus is, e.g., an all-electric vehicle, a hybrid electric vehicle, or a plug-in hybrid electric vehicle. To satisfy the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

Some embodiments of the present application are described below. The embodiments described below are exemplary and are provided only to explain the present application, and should not be construed as limiting the present application. For techniques or conditions not specified in the embodiments, they are implemented as described above, or according to techniques or conditions described in the literature in the field, or according to product instructions. Reagents or instruments used without a specified manufacturer are conventional products that can be obtained commercially, or can be synthesized in a conventional manner from commercially available products.

Unless otherwise specified, in the following examples and contrast examples, raw materials with the same chemical formula come from the same synthesis batch or the same product number, or are prepared according to the same stoichiometric ratio and by the same method.

In the embodiments hereafter, room temperature refers to 20°C-30°C.

It should be noted that, the polymeric monomers involved in the following examples and comparative examples are pretreated by alkaline washing (5 wt% NaOH aqueous solution), water washing, distillation and drying before use.

In the following examples, elemental analysis, structural identification and content analysis of the polymerization inhibitor residues in the gel electrolyte can be carried out by one or more of the following detection methods including but not limited to: FIB-SEM combined EDS analysis, Fourier transform infrared (FT-IR) spectroscopy, ultraviolet spectroscopy, a proton nuclear magnetic resonance (¹H NMR) method, gel permeation chromatography (GPC), high-performance liquid chromatography (HPLC), mass spectrometry, etc. Sample preparation methods and test methods for these test methods are known to those skilled in the art, and test parameters can be appropriately adjusted according to the specific structures and material properties of the compounds. Unless otherwise specified, the gel electrolyte sample of the positive electrode active material layer, the gel electrolyte sample of the negative electrode active material layer, and the gel electrolyte sample outside the positive and negative electrode plates can be extracted respectively. The mass fractions of the polymerization inhibitor residues at three locations can be obtained respectively and averaged. The average value can be taken as the test value of the mass fraction of the polymerization inhibitor residue in the gel electrolyte of the secondary battery.

### Example 1.

### (1) Preparation of negative electrode plate

A Silicon-carbon composite negative electrode material (with a silicon element content of 20 wt%), a conductive agent (acetylene black), and a binder (carboxymethyl cellulose) were mixed in a weight ratio of 97:2:1, added with deionized water and stirred evenly to obtain a negative electrode slurry. The negative electrode slurry was coated on the surfaces of both sides of copper foil, dried, cold-pressed, and punched to obtain a negative electrode plate.

### (2) Preparation of positive electrode plate

The nickel-cobalt-manganese ternary positive electrode material (NCM811), the conductive agent acetylene black and the binder polyvinylidene fluoride (PVDF) were fully stirred and mixed in a N-methylpyrrolidone (NMP) solvent system according to a weight ratio of 94:3:3, and then coated on the surfaces of both sides of aluminum foil, oven-dried and cold-pressed to obtain a positive electrode plate, which was cut into a corresponding dimension for later use.

### (3) Selection of separator

A polyolefin (PE) separator with a double-sided alumina coating layer was selected as the separator.

### (4) Preparation of battery cell

The negative electrode plate, the separator and the positive electrode plate obtained by punching were stacked in sequence to obtain an electrode assembly, which was then subjected to tape application, tab attachment, aluminum laminate film encapsulation, and hot pressing, thereby obtaining a dry cell in the form of a small pouch with one side open.

### (5) Formulation of gel electrolyte precursor solution

The carbonate solvents ethylene carbonate (EC), diethyl carbonate (DEC) and methyl ethyl carbonate (EMC) were mixed according to the volume ratio of EC∶DEC∶EMC = 1∶1∶1, stirred uniformly, and added with 1.0 mol/L of lithium hexafluorophosphate for dissolution to form a basic electrolyte solution. The basic electrolyte solution was added with a polyethylene glycol diacrylate monomer (with a weight average molecular weight M_{w} of about 500 Da) at a weight percentage of 10 wt% and an azobisisobutyronitrile initiator at a weight percentage of 0.2 wt% and mixed evenly, and then added with hydroquinone at a mass fraction of 1,000 ppm (corresponding to 0.1 wt%) for dissolution to obtain a gel electrolyte precursor solution.

The weight percentage of the polymeric monomer (polyethylene glycol diacrylate), the weight percentage of the initiator (the azobisisobutyronitrile initiator), and the mass fraction of the polymerization inhibitor (hydroquinone) were all calculated based on the formulated gel electrolyte precursor solution.

### (6) Preparation of cell containing gel electrolyte precursor solution

The gel electrolyte precursor solution obtained in the step (5) was injected into the dry cell obtained in the step (4). The injection coefficient was 2.5 g/Ah. After liquid injection, negative pressure is applied for encapsulation.

### (7) Preparation of cell containing gel electrolyte to obtain secondary battery.

The battery cell obtained in the step (6) was infiltrated at 45°C for 30 hours (h), and then formed at 45°C. After the formation was completed, it was cured at a high temperature of 70°C for 5 h to obtain a cell containing a gel electrolyte (which was a secondary battery, and further was a lithium-ion secondary battery).

### Examples 2-4. Changing the dosage of polymerization inhibitor

Examples 2-4 employed a method substantially the same as that of Example 1 to prepare a gel electrolyte precursor solution and a secondary battery (containing a gel electrolyte cell), the difference being that the dosage of the polymerization inhibitor was different and the amount of hydroquinone added in the step (5) was changed.

### Examples 5-7. Changing the type of polymerization inhibitor

Examples 5-7 employed a method substantially the same as that of Example 1 to prepare a gel electrolyte precursor solution and a secondary battery (containing a gel electrolyte cell), the difference being that the type of the polymerization inhibitor was different. In the step (5), hydroquinone was replaced by 2-nitrohydroquinone (Example 5), catechol (Example 6) and p-tert-butylcatechol (Example 7).

Examples 8-14. Changing one or more parameters among the type, molecular weight, and dosage of the polymeric monomer, and the type and dosage of the initiator.

Examples 8-14 employed a method substantially the same as that of Example 1 to a gel electrolyte precursor solution and a secondary battery (including a gel electrolyte cell), the difference being that one or more parameters among the type, molecular weight, dosage of the polymeric monomers and the type and dosage of the initiators were different.

In the Example 13, the initiator BPO was dibenzoyl peroxide.

Comparative Examples 1-5. No polymerization inhibitors was added.

Comparative Examples 1-5 employed methods substantially the same as those of Examples 1, 11, 12, 13 and 14 respectively to prepare gel electrolyte precursor solutions and secondary batteries (containing gel electrolyte cells), the difference being that no polymerization inhibitor was added, and the basic electrolyte solution of Example 1 was used instead of the gel electrolyte precursor solution.

Parameters of Examples 1-14 and Comparative Examples 1-5 could also be referred to Tables 1, 2 and 3. In the "Molecular weight" column, when the polyene compound had a polyethylene glycol unit, the corresponding weight-average molecular weight Mw of "about 500 Da" represented ± 10 Da.

**Table 1.**

| Related parameters of polymeric monomers in gel electrolyte precursor solution | | | | | | | |
|---|---|---|---|---|---|---|---|
| Serial number | Sum of mass percentage of polymeric monomers in gel electrolyte precursor solution | compound Polyene | Molecular weight/Da | Number of double bonds in one molecule | Mass percentage of polyene compound in gel electrolyte precursor solution | Monoene compound | Mass percentage of monoene compounds in the gel electrolyte precursor solution |
| Example 1 | 10% | polyethylene glycol diacrylate | Mw of about 500 Da | 2 | 10% | None | 0 |
| Example 2 | 10% | polyethylene glycol diacrylate | the same as that in Example 1 | 2 | 10% | None | 0 |
| Example 3 | 10% | polyethylene glycol diacrylate | the same as that in Example 1 | 2 | 10% | None | 0 |
| Example 4 | 10% | polyethylene glycol diacrylate | the same as that in Example 1 | 2 | 10% | None | 0 |
| Example 5 | 10% | polyethylene glycol diacrylate | the same as that in Example 1 | 2 | 10% | None | 0 |
| Example 6 | 10% | polyethylene glycol diacrylate | the same as that in Example 1 | 2 | 10% | None | 0 |
| Example 7 | 10% | polyethylene glycol diacrylate | the same as that in Example 1 | 2 | 10% | None | 0 |
| Example 8 | 2% | polyethylene glycol diacrylate | the same as that in Example 1 | 2 | 2% | None | 0 |
| Example 9 | 15% | polyethylene glycol diacrylate | the same as that in Example 1 | 2 | 15% | None | 0 |
| Example 10 | 10% | polyethylene glycol diacrylate | the same as that in Example 1 | 2 | 10% | None | 0 |
| Example 11 | 12% | Pentaerythritol tetraacrylate | 352 Da | 4 | 10% | Methyl acrylate | 2% |
| Example 12 | 8% | Pentaerythritol triacrylate | 298 Da | 3 | 8% | None | 0 |
| Example 13 | 10% | polyethylene glycol dimethacrylate | Mw of about 500 Da | 2 | 10% | None | 0 |
| Example 14 | 10% | 1,4-butanediol dimethacrylate | 226 Da | 2 | 8% | Methyl acrylate | 2% |
| Comparative Example 1 | 10% | polyethylene glycol diacrylate | Mw of about 500 Da | 2 | 10% | None | 0 |
| Comparative Example 2 | 12% | Pentaerythritol tetraacrylate | 352 Da | 4 | 10% | Methyl acrylate | 2% |
| Comparative Example 3 | 8% | Pentaerythritol triacrylate | 298 Da | 3 | 8% | None | 0 |
| Comparative Example 4 | 10% | polyethylene glycol dimethacrylate | Mw of about 500 Da | 2 | 10% | None | 0 |
| Comparative Example 5 | 10% | 1,4-butanediol dimethacrylate | 226 Da | 2 | 8% | Methyl acrylate | 2% |

**Table 2.**

| Related parameters of polymerization inhibitor in gel electrolyte precursor solution | | | | | | |
|---|---|---|---|---|---|---|
| Serial number | Polymerization inhibitor | the number of polymerization inhibition groups (phenolic hydroxyl groups) in one molecule of polymerization inhibitor | Mass ratio of polymerization inhibition group: initiator | Mass proportion of polymerization inhibitor in gel electrolyte precursor solution | Mass fraction of polymerization inhibitor in gel electrolyte precursor solution | Mass ratio of polymerization inhibitor: initiator |
| Example 1 | hydroquinone | 2 | 1.55% | 0.1% | 1,000 ppm | 5% |
| Example 2 | hydroquinone | 2 | 0.08% | 0.005% | 50 ppm | 0.25% |
| Example 3 | hydroquinone | 2 | 0.77% | 0.05% | 500 ppm | 2.5% |
| Example 4 | hydroquinone | 2 | 3.09% | 0.2% | 2,000 ppm | 10% |
| Example 5 | 2-nitrohydroquinon | 2 | 1.10% | 0.1% | 1,000 ppm | 5% |
| Example 6 | Catechol | 2 | 1.55% | 0.1% | 1,000 ppm | 5% |
| Example 7 | p-tert-butylcatechol | 2 | 0.51% | 0.1% | 1,000 ppm | 5% |
| Example 8 | hydroquinone | 2 | 0.31% | 0.1% | 1,000 ppm | 1% |
| Example 9 | hydroquinone | 2 | 1.55% | 0.1% | 1,000 ppm | 5% |
| Example 10 | benzenetriol | 3 | 2.02% | 0.1% | 1,000 ppm | 5% |
| Example 11 | p-methoxyphenol | 1 | 0.69% | 0.1% | 1,000 ppm | 5% |
| Example 12 | Bisphenol A | 2 | 0.30% | 0.1% | 1,000 ppm | 2% |
| Example 13 | 2,6-Di-tert-butylphenol | 1 | 1.65% | 0.1% | 1,000 ppm | 20% |
| Example 14 | hydroquinone | 2 | 1.24% | 0.1% | 1,000 ppm | 4% |
| Comparative Example 1 | / | / | / | / | / | / |
| Comparative Example 2 | / | / | / | / | / | / |
| Comparative Example 3 | / | / | / | / | / | / |
| Comparative Example 4 | / | / | / | / | / | / |
| Comparative Example 5 | / | / | / | / | / | / |

**Table 3. Related parameters in gel electrolyte precursor solution**

| | Related parameters of initiator | | | Related parameters of polymerization inhibitor | | | | |
|---|---|---|---|---|---|---|---|---|
| | | | | Polymerization inhibition group | Polymerization inhibitor | Aromatic ring in polymerization inhibitor | | |
| Serial number | Initiator type | Mass percentage in the gel electrolyte precursor solution | Initiator: monomer mass ratio | Mass proportion of phenolic hydroxyl group in the polymerization inhibitor | Molecular weight/Da | Number of aromatic rings | Other substituents on the aromatic ring | The number of non-hydroxyl substituents on the aromatic ring |
| Example 1 | AIBN | 0.2% | 2% | 30.91% | 110 | 1 | None | 0 |
| Example 2 | AIBN | 0.2% | 2% | 30.91% | 110 | 1 | None | 0 |
| Example 3 | AIBN | 0.2% | 2% | 30.91% | 110 | 1 | None | 0 |
| Example 4 | AIBN | 0.2% | 2% | 30.91% | 110 | 1 | None | 0 |
| Example 5 | AIBN | 0.2% | 2% | 21.94% | 155 | 1 | Nitro | 1 |
| Example 6 | AIBN | 0.2% | 2% | 30.91% | 110 | 1 | None | 0 |
| Example 7 | AIBN | 0.2% | 2% | 10.24% | 166 | 1 | tert-butyl | 1 |
| Example 8 | AIBN | 0.2% | 10% | 30.91% | 110 | 1 | None | 0 |
| Example 9 | AIBN | 0.3% | 2% | 30.91% | 110 | 1 | None | 0 |
| Example 10 | AIBN | 0.2% | 2% | 40.48% | 126 | 1 | None | 0 |
| Example 11 | AIBN | 0.2% | 2% | 13.71% | 124 | 1 | Methyl | 1 |
| Example 12 | AIBN | 0.4% | 5% | 14.91% | 228 | 2 | None | 0 |
| Example 13 | BPO | 0.05% | 0.5% | 8.25% | 206 | 1 | tert-butyl | 2 |
| Example 14 | AIBN | 0.2% | 2.5% | 30.91% | 110 | 1 | None | 0 |
| Comparative Example 1 | AIBN | 0.2% | 2% | None | / | / | / | / |
| Comparative Example 2 | AIBN | 0.2% | 2% | None | / | / | / | / |
| Comparative Example 3 | AIBN | 0.4% | 5% | None | / | / | / | / |
| Comparative Example 4 | AIBN | 0.05% | 0.5% | None | / | / | / | / |
| Comparative Example 5 | AIBN | 0.2% | 2.5% | None | / | / | / | / |

### Test and analysis methods

### 1. material structure and composition test method

The filling coefficient α_{P} of the gel electrolyte in the positive electrode active material layer = V_{P1} / (V_{P2} × φ_{P}), and the filling coefficient α_{N} of the gel electrolyte in the negative electrode active material layer = V_{N1} / (V_{N2} × φ_{N}). The definitions of V_{P1}, V_{P2}, φ_{P}, V_{N1}, V_{N2} and φ_{N} can be found in the previous text. The theoretical value range of α_{P} and α_{N} is 0-1. When the value is 0, there is no gel electrolyte inside the plate; and when the value is 1, the inside of the plate is completely filled. The higher the values of α_{P} and α_{N}, the more fully the gel electrolyte is distributed inside the electrode plate.
the α_{P} of the positive electrode active material layer located at the innermost side of the electrode assembly is denoted as α_{P0}, and the α_{N} of the negative electrode active material layer located at the innermost side of the electrode assembly is denoted as α_{N0}. When the α_{P0} and α_{N0} are higher, it also indicates that the gel electrolyte is distributed inside the electrode plate more fully.

The sample to be tested for the electrode active material layer of the electrode plate can be prepared by the following methods: discharging the secondary battery to a nominal lower limit voltage, then disassembling the battery cell to obtain the positive electrode plate and the negative electrode plate, and then extracting the sample to be tested for the positive electrode active material layer and the sample to be tested for the negative electrode active material layer. The nominal lower limit voltage can be obtained by testing with conventional methods or according to the definition from the manufacturer.

Focused electron beam (FIB) technology and scanning electron microscopy (SEM) are used for testing and analysis. In connection with focused electron beam (FIB) continuous slicing, energy dispersive spectroscopy (EDS) combined with elemental energy spectrum and three-dimensional reconstruction analysis software, the following parameters of local regions of the electrode active material layer, and in turn the test values of α_{P}, α_{N}, α_{P0} and α_{N0} are obtained: the mass Mᵢ and volume Vᵢ of the local region, the mass Mᵢ₁ and volume Vᵢ₁ of the gel electrolyte in the local region, and the porosity φᵢ of the local region. The filling coefficient αᵢ of the local region = Vᵢ₁ / (Vᵢ × φᵢ).

For α_{P} and α_{N}, several (≥ 3) local regions of the electrode active material layer are selected at at least 3 radial positions of the electrode assembly. The "at least three radial positions" at least include the innermost side, the outermost side, and the middle part between the innermost side and the outermost side of the electrode assembly.

For α_{P0} and α_{N0}, several (≥ 3) local regions of electrode active material layers at different lateral positions on the innermost side of the electrode assembly are selected. The "lateral direction" refers to a direction perpendicular to the thickness direction of the corresponding electrode active material layer.

The "local region of the electrode active material layer" has a lateral area greater than or equal to 25 µm², and a thickness greater than or equal to 10 µm.

The statistical analysis results of CV_{Pi}, CV_{Ni}, CV_{Pj}, and CV_{Nj} (the definitions of these parameters can be found in the previous text) can also be obtained, which can be used for analyzing the distribution uniformity of the gel electrolyte at different lateral positions and at different electrode plate thickness positions in the positive and negative electrode plates.

The test and analysis of the aforementioned parameters can use a FEI Scios 2HiVac device. The following methods are adopted in detail: the three-dimensional structure of the sample is reconstructed by utilizing the dynamic nanoscale spatial resolution of FIB-SEM and the layer-by-layer cutting technology, and the distribution and proportion of each element are obtained by energy spectrum analysis of EDS elements, and finally the relevant parameters are obtained by quantitative analysis via software.

2. Test and analysis of the polymerization inhibition effect of the polymerization inhibitor on the gelation reaction system (gel electrolyte precursor solution).
(1) judging "whether the polymerization inhibitor has a polymerization inhibition effect during the test".

The viscosity change of the gel electrolyte precursor solution can be tested using the following method: taking and placing a certain mass of the sample to be tested in a sample container, and testing with a rotary viscometer with the instrument model of DV2TLV produced by Brookfield. A shear force exerted on a rotor as it rotates continuously at a constant speed in a sample at 25°C causes a spring to generate a torque that is proportional to the viscosity, so as to obtain a viscosity value. The testing device satisfies the following testing environment conditions: 1. external environment of the device: temperature: 25°C, humidity: RH < 80%; 2. internal environment of the device: 2/3 of the sample container is immersed in the water bath pot, the medium is water, which is used for keeping the sample at a constant temperature.

Acquisition of the sample to be tested: the formulated gel electrolyte precursor solution to be tested is tested for its initial viscosity η0; the gel electrolyte precursor solution to be tested is encapsulated under a negative pressure of 5 kPa, and then kept at 45°C for 1,200 min, and then cooled to 25°C to test the viscosity η1. The viscosity increase ratio of the system Rη = (η1 - η0) / η0 × 100%.

Analysis method: When Rη ≤ 20%, it is considered whether the polymerization inhibitor has a polymerization inhibition effect during the test period (5kPa, kept at 45°C for 1,200 min), which can also be considered as satisfying "at 45°C, the polymerization inhibition time of the polymerization inhibitor against the free radical polymerization system is greater than or equal to 1,200 min (20 h)". When the system exhibits a significant viscosity change or a distinct non-flowing gel phase, the polymerization inhibition effect of the polymerization inhibitor can be considered to be failed.

(2) judging "whether a free radical polymerization reaction has occurred in the free radical polymerization system".

Acquisition of the sample to be tested: the formulated gel electrolyte precursor solution to be tested is tested for the chemical composition of polymeric monomers at its initial state; the gel electrolyte precursor solution to be tested is encapsulated under a negative pressure of 5 kPa, and then kept at 70°C for 600min, and then cooled to 25°C to test the generation of the crosslinked polymer.

The chemical composition changes of the gel electrolyte precursor solution are tested with the following methods: the "whether the crosslinked polymer is generated" is analyzed by at least one of proton nuclear magnetic resonance spectroscopy (¹H NMR), gel permeation chromatography (GPC), and high performance liquid chromatography (HPLC).

Analysis method: when the characteristic peak of the crosslinked polymer appears in proton nuclear magnetic resonance spectroscopy (¹H NMR) (such as the characteristic peak of the methylene hydrogen in -C*H*₂-C(CH₃)(COOCH₃)- of the methyl methacrylate system), and when polymer characteristic peaks other than monomers appear in the gel permeation chromatography (GPC) or high performance liquid chromatography (HPLC), it is considered that "whether the crosslinked polymer has been generated," and further, it is considered that "the free radical polymerization of the free radical polymerization system has occurred."

3. Testing and analysis of capacity utilization and capacity retention rate of battery.

The theoretical design capacity of the positive electrode of the battery is denoted as C0. The battery is subjected to charge-discharge cycling at a rate of 0.5 C between 2.8 V and 4.3 V. The discharge capacity of the battery in the first cycle is defined as C1, and the discharge capacity of the battery in the 500th cycle is denoted as C2. The capacity utilization of the battery cell is defined as C1 / C0 × 100%, and the capacity retention rate of the battery cell after 500 cycles is defined as C2 / C1 × 100%.

The test results are show as "capacity utilization" and "capacity retention rate after 500 cycles" in Table 4.

### 4. Observation of lithium plating

The battery is subjected to charge-discharge cycling at a rate of 0.5 C between 2.8 V and 4.3 V for 500 cycles. After full charging, the battery is disassembled and the lithium plating at the negative electrode interface is observed.

### Test and analysis results

The gel electrolyte precursor solutions of Examples 1-14 are each added with the polymerization inhibitor. After the electrode assembly is infiltrated, formed, and then subjected to a curing reaction to prepare secondary batteries including gel electrolytes, all of which have excellent capacity utilization and cycling performance. Furthermore, after 500 cycles, the secondary batteries prepared in Examples 1-14 show no significant lithium plating at the negative electrode interface.

In contrast, no polymerization inhibitor is added to the gel electrolyte precursor solutions of Comparative Examples 1 to 5. As a result, significant lithium plating is observed at the negative electrode interface, and the capacity utilization and cycling performance are significantly deteriorated.

The phenolic polymerization inhibitors used in Examples 1-14 all form polymerization inhibitor residues mainly including quinone residues, wherein the mass fraction of the quinone residue in the gel electrolyte of the prepared secondary battery satisfies 50 ppm-2,000 ppm, and further satisfies 500 ppm-1,000 ppm.

According to the "material structure and composition test method", α_{P}, α_{N}, α_{P0}, α_{N0} in Examples 1-14 all satisfy ≥ 0.9, while α_{P} and α_{N} in Comparative Examples 1-5 are all below 0.8, and α_{P0} and α_{N0} in Comparative Examples 1-5 are all below 0.75.

It can be seen that, after the addition of the polymerization inhibitor to the gel electrolyte precursor solution, the infiltrating effect of the gel electrolyte precursor solution on the electrode plates is significantly improved, resulting in more thorough infiltrating of the electrode active material layer and a significant improvement in the capacity utilization and cycling performance of the battery.

According to the comparison of the analysis results of CV_{Pi}, CV_{Ni}, CV_{Pj}, CV_{Nj} in the examples and comparative examples, after the addition of the polymerization inhibitor to the gel electrolyte precursor solution, the distribution uniformity of the formed gel electrolyte at different lateral positions on both the positive and negative electrode plates is improved, and the distribution uniformity of the formed gel electrolyte at different thickness positions on both the positive and negative electrode plates is significantly improved. Illustratively, the comparison results of Examples 1, 11, 12, 13 and 14 with the corresponding Comparative Examples 1-5 are shown.

The gel electrolyte precursor solutions formulated with the polymerization inhibitors in Examples 1-14 are free radical polymerization systems, and all satisfy the following two features:
(1) at 45°C, the polymerization inhibitor inhibits the polymerization of the free radical polymerization system for a time of greater than or equal to 1,200 min; and
(2) at 70°C, the initiator is capable of initiating the free radical polymerization of the free radical polymerization system within 600 min.

It can be seen that after the polymerization inhibitor is introduced into the gel electrolyte precursor solution, full contact between the gel electrolyte formed by curing and the electrode active substance inside the electrode plate is facilitated, thereby optimizing the transport channels of active ions, facilitating the capacity utilization of the positive electrode plate, the negative electrode plate and the battery cell, and also helping to suppress lithium plating at the negative electrode interface and improve the cycling performance of the battery.

**Table 4.**

| Serial number | Capacity utilization rate (%) | Capacity retention after 500 cycles (%) |
|---|---|---|
| Example 1 | 96.5 | 86.7 |
| Example 2 | 90.7 | 80.9 |
| Example 3 | 96.3 | 84.4 |
| Example 4 | 95.8 | 81.1 |
| Example 5 | 95.1 | 85 |
| Example 6 | 94.3 | 80.8 |
| Example 7 | 93.9 | 78.4 |
| Example 8 | 94.4 | 84.3 |
| Example 9 | 93.8 | 86.1 |
| Example 10 | 96.1 | 86.9 |
| Example 11 | 94.6 | 84.7 |
| Example 12 | 94.9 | 83.2 |
| Example 13 | 95.7 | 83.4 |
| Example 14 | 96.6 | 83.5 |
| Comparative Example 1 | 87.2 | 73.4 |
| Comparative Example 2 | 85.3 | 71.5 |
| Comparative Example 3 | 85.7 | 70.8 |
| Comparative Example 4 | 86.4 | 72 |
| Comparative Example 5 | 87.5 | 71.5 |

The above description of various embodiments and examples tends to emphasize the differences between each embodiment and example, and their similarities or common features can be cross-referenced. For the sake of brevity, they will not be described in detail here anymore. The technical features of the embodiments and examples described above can be combined in any manner. To keep the description concise, not all possible combinations of the technical features in the above embodiments and examples have been described. However, as long as these combinations of technical features do not conflict with each other, they should be considered within the scope described in the specification. It should be noted that the present application is not limited to the aforementioned embodiments and examples. The aforementioned embodiments and examples are merely examples, and any embodiments and examples that have substantially the same configuration and achieve the same effects within the scope of the technical solutions of the present application are included within the scope of the present application. The embodiments and examples described above only represent several embodiments of the present application, and their descriptions are more detailed, but they cannot be understood as limiting the patent scope. Moreover, without departing from the scope of the subject matter of the present application, various modifications that can be conceived of by those skilled in the art and are applied to the embodiments or examples, and other embodiments constructed by combining some of the constituent elements of the embodiments or examples are also encompassed within the scope of the present application.

## Claims

1. A secondary battery comprising a plurality of electrode plates, wherein the plurality of electrode plates comprise positive electrode plates and negative electrode plates; any one of the electrode plates independently comprises an electrode active material layer;
the secondary battery comprises a gel electrolyte, which comprises a first gel electrolyte and a second gel electrolyte, the first gel electrolyte is located inside the electrode active material layer, and the second gel electrolyte is located outside the plurality of electrode plates; wherein the first gel electrolyte and the second gel electrolyte each independently comprises a crosslinked polymer, a gelling solvent, and an electrolyte salt;
wherein the crosslinked polymer comprises a carbon-based segment; the gel electrolyte comprises a polymerization inhibitor residue, which is a substance generated from a polymerization inhibitor following a free radical polymerization inhibition reaction, and the polymerization inhibitor comprises a polymerization inhibition group capable of terminating the free radical polymerization reaction.

2. The secondary battery according to claim 1, wherein a mass fraction of the polymerization inhibitor residue in the gel electrolyte is 50 ppm-2,000 ppm; and optically 500 ppm-1,000 ppm.

3. The secondary battery according to claim 1 or 2, wherein the polymerization inhibitor residue comprises a quinone residue of a phenolic polymerization inhibitor; wherein the phenolic polymerization inhibitor comprises an aromatic ring and a phenolic hydroxyl group directly bonded to the aromatic ring; and in one molecule of the phenolic polymerization inhibitor, the polymerization inhibition group comprises one or more phenolic hydroxyl groups;
optionally, the phenolic polymerization inhibitor comprises one or more of the following compounds: one or more of phenol, 2,6-di-tert-butylphenol, p-methoxyphenol, 2,6-di-tert-butyl-4-methylphenol, hydroquinone, catechol, 2-nitrohydroquinone, monomethyl hydroquinone, trimethyl hydroquinone, p-tert-butylcatechol, 2,5-di-tert-butylhydroquinone, bisphenol A, 4,4'-dihydroxybiphenyl, 4,4'-butylidene bis(6-tert-butyl-3-methylphenol), benzenetriol and 4-bromophenol.

4. The secondary battery according to any one of claims 1-3, wherein the crosslinked polymer comprises repeating units formed by free radical polymerization of polymeric monomers; the polymeric monomer comprises a polyene compound, and also comprises or does not comprise a monoene compound, wherein the polyene compound has multiple polymerizable carbon-carbon double bonds, and the monoene compound has one polymerizable carbon-carbon double bond;
optionally, the polyene compound comprises one or more of ethylene glycol diacrylate, ethylene glycol dimethacrylate, polyethylene glycol diacrylate, polyethylene glycol dimethacrylate, 1,4- butanediol dimethacrylate, 1,6-hexanediol dimethacrylate, 1,4-butanediol diacrylate, glyceryl dimethacrylate, dimethyl 1,2-propylene glycol acrylate, 1,3-butanediol dimethacrylate, dipropylene glycol diacrylate, trimethylolpropane trimethylacrylate, trimethylolpropane triacrylate, glyceryl trimethylacrylate, triallyl trimesate, cyclohexanetriol trimethylacrylate, pentaerythritol triacrylate, pentaerythritol tetraacrylate and pentaerythritol tetramethylacrylate.

5. The secondary battery according to any one of claims 1-4, wherein an electrode active material layer in the positive electrode plate is denoted as a positive electrode active material layer, and an electrode active material layer in the negative electrode plate is denoted as a negative electrode active material layer;
the volume of the gel electrolyte in the positive electrode active material layer is denoted as V_{P1}, and the volume and porosity of the positive electrode active material layer are denoted as V_{P2} and φ_{P} respectively; so as to define α_{P} = V_{P1} / (V_{P2} × φ_{P});
the volume of the gel electrolyte in the negative electrode active material layer is denoted as V_{N1}, and the volume and porosity of the negative electrode active material layer are denoted as V_{N2} and φ_{N2} respectively; so as to define α_{N} = V_{N1} / (V_{N2} × φ_{N});
wherein α_{P} and α_{N} are each independently greater than or equal to 0.85; and
optionally, α_{P} and α_{N} are each independently greater than or equal to 0.9.

6. The secondary battery according to claim 5, wherein the secondary battery comprises a separator located between the positive electrode plate and the negative electrode plate, and the positive electrode plate, the negative electrode plate and the separator form an electrode assembly;
the α_{P} of the positive electrode active material layer located at the innermost side of the electrode assembly is denoted as α_{P0}, and the α_{N} of the negative electrode active material layer located at the innermost side of the electrode assembly is denoted as α_{N0};
wherein α_{P0} and α_{N0} are each independently greater than or equal to 0.85; and
optionally, α_{P0} and α_{N0} are each independently greater than or equal to 0.9.

7. A gel electrolyte precursor solution comprising the following components: a free radical polymerization system, a polymerization inhibitor, an electrolyte salt and an electrolyte solvent;
wherein the free radical polymerization system comprises a polymeric monomer and an initiator, wherein the initiator is capable of initiating a free radical polymerization reaction of the polymeric monomer to form a crosslinked polymer; and the polymerization inhibitor comprises a polymerization inhibition group capable of terminating the free radical polymerization reaction of the free radical polymerization system.

8. The gel electrolyte precursor solution according to claim 7, which satisfies one or more of the following features:
a mass percentage of the polymeric monomer in the gel electrolyte precursor solution is 2%-15%; and
a mass fraction of the polymerization inhibitor in the gel electrolyte precursor solution is 50 ppm-2,000 ppm.

9. The gel electrolyte precursor solution according to claim 7 or 8, which satisfies one or more of the following features:
a mass percentage of the polymeric monomer in the gel electrolyte precursor solution is 8%-12%; and
a mass fraction of the polymerization inhibitor in the gel electrolyte precursor solution is 500 ppm-1,000 ppm.

10. The gel electrolyte precursor solution according to any one of claims 7-9, wherein the polymerization inhibitor comprises a phenolic polymerization inhibitor; wherein the phenolic polymerization inhibitor comprises an aromatic ring and a phenolic hydroxyl group directly bonded to the aromatic ring; and in one molecule of the phenolic polymerization inhibitor, the polymerization inhibition group comprises one or more phenolic hydroxyl groups.

11. The gel electrolyte precursor solution according to claim 10, wherein the phenolic polymerization inhibitor satisfies one or more of the following features:
in one molecule, the phenolic polymerization inhibitor contains 1-5 phenolic hydroxyl groups;
in one molecule, the phenolic hydroxyl group accounts for 7.5%-40.5% by mass in the phenolic polymerization inhibitor;
in one molecule, the phenolic polymerization inhibitor contains one or more aromatic rings; when there are multiple aromatic rings, adjacent aromatic rings are connected by a chemical bond or -C(R₁R₂)-, wherein R₁ and R₂ are each independently H or C₁₋₄ alkyl; and
the molecular weight of the phenolic polymerization inhibitor is less than or equal to 1,000 Da.

12. The gel electrolyte precursor solution according to claim 10 or 11, wherein the phenolic polymerization inhibitor satisfies one or more of the following features:
in one molecule, the phenolic polymerization inhibitor contains 1, 2 or 3 phenolic hydroxyl groups;
in one molecule, the phenolic hydroxyl group accounts for 8%-35% by mass in the phenolic polymerization inhibitor;
in one molecule, the phenolic polymerization inhibitor contains 1 or 2 aromatic rings; when there are multiple aromatic rings, adjacent aromatic rings are connected by a chemical bond or - C(R₁R₂)-, wherein R₁ and R₂ are each independently H or C₁₋₃ alkyl; and -C(R₁R₂)- has 1-4 carbon atoms; and
the molecular weight of the phenolic polymerization inhibitor is less than or equal to 500 Da.

13. The gel electrolyte precursor solution according to any one of claims 10-12, wherein any aromatic ring in the phenolic polymerization inhibitor is independently connected with 0, 1 or more non-hydroxyl substituents selected from the group consisting of halogen, nitro, C₁₋₄ alkyl and C₁₋₃ alkoxy.

14. The gel electrolyte precursor solution according to any one of claims 10-13, wherein any aromatic ring in the phenolic polymerization inhibitor is independently connected with 0, 1 or more non-hydroxyl substituents selected from the group consisting of halogen and nitro; wherein the halogen is selected from one or more of fluorine, chlorine and bromine.

15. The gel electrolyte precursor solution according to any one of claims 10-13, wherein the phenolic polymerization inhibitor comprises one or more of the following compounds: one or more of phenol, 2,6-di-tert-butylphenol, p-methoxyphenol, 2,6-di-tert-butyl-4-methylphenol, hydroquinone, catechol, 2-nitrohydroquinone, monomethyl hydroquinone, trimethyl hydroquinone, p-tert-butylcatechol, 2,5-di-tert-butylhydroquinone, bisphenol A, 4,4'-dihydroxybiphenyl, 4,4'-butylidene bis(6-tert-butyl-3-methylphenol), benzenetriol and 4-bromophenol.

16. The gel electrolyte precursor solution according to any one of claims 7-15, which satisfies one or more of the following features:
a mass ratio of the initiator to the polymeric monomer is 0.5%-10%;
a mass ratio of the polymerization inhibitor to the initiator is 0.1%-50%; and
a mass ratio of the polymerization inhibition group in the polymerization inhibitor to the initiator is 0.01%-15%.

17. The gel electrolyte precursor solution according to claim 16, which satisfies one or more of the following features:
a mass ratio of the initiator to the polymeric monomer is 0.5%-5%;
a mass ratio of the polymerization inhibitor to the initiator is 0.1%-20%; and
a mass ratio of the polymerization inhibition group in the polymerization inhibitor to the initiator is 0.05%-5%.

18. The gel electrolyte precursor solution according to any one of claims 7-17, which satisfies one or more of the following features:
the polymeric monomer comprises a polyene compound, and also comprises or does not comprise a monoene compound, wherein the polyene compound has multiple polymerizable carbon-carbon double bonds, and the monoene compound has one polymerizable carbon-carbon double bond; and
the initiator comprises one or more of an azo initiator and a peroxide initiator.

19. The gel electrolyte precursor solution according to any one of claim 18, which satisfies one or more of the following features:
the polyene compound has a structure of [CH₂=C(R₀₁)-]ₖU₁, wherein k is an integer greater than or equal to 2, and U₁ is a k-valent non-aromatic group or a k-valent aromatic group; and R₀₁ is independently H or methyl at each occurrence;
the polymeric monomer comprises a monoene compound, which comprises one or more of CH₂=C(R₀)-R_{A}, 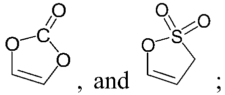 R₀ is H or methyl; R_{A} is -COOH, -C(=O)-O-R₃, -CH(-OR₄₁)(-OR₄₂), cyano, or phenyl; R₃ is C₁₋₆ alkyl, substituted C₁₋₆ alkyl, tri(C₁₋₆ hydrocarbyl)silyl, or tris(C₁₋₆ hydrocarbyloxy)silyl; R₄₁and R₄₂ are each independently C₁₋₃ alkyl; the C₁₋₆ alkyl in the substituted C₁₋₆ alkyl is substituted by one or more substituents selected from the group consisting of -OH, a halo group, epoxy, and cyano;
the initiator comprises an azo initiator, and the azo initiator comprises one or more of azodiisobutyronitrile, dimethyl azobisisobutyrate and azodiisoheptylnitrile;
the initiator comprises a peroxide initiator, which comprises one or more of didodecanoyl peroxide, dibenzoyl peroxide, bis(2,4-dichlorobenzoyl) peroxide, diacetyl peroxide, dioctanoyl peroxide, dilauroyl peroxide, peroxydicarbonate, diisopropyl peroxydicarbonate, diisobutyl peroxydicarbonate, dicyclohexyl peroxydicarbonate, and bis(p-tert-butylcyclohexyl) peroxydicarbonate.

20. The gel electrolyte precursor solution according to claim 19, wherein the U₁ has a structure of (-C(=O)-O-)ₖU₀ or (-O-)ₖU₀ or a k-valent aryl;
wherein U₀ is connected to an adjacent oxygen atom via a carbon atom, and U₀ is a k-valent alkyl or a k-valent alkyl containing one or more ether groups.

21. The gel electrolyte precursor solution according to any one of claims 18-19, wherein the polymeric monomer satisfies one or more of the following features:
the polyene compound comprises one or more of ethylene glycol diacrylate, ethylene glycol dimethacrylate, polyethylene glycol diacrylate, polyethylene glycol dimethacrylate, 1,4-butanediol dimethacrylate, 1,6-hexanediol dimethacrylate, 1,4-butanediol diacrylate, glyceryl dimethacrylate, dimethyl 1,2-propylene glycol acrylate, 1,3-butanediol dimethacrylate, dipropylene glycol diacrylate, trimethylolpropane trimethylacrylate, trimethylolpropane triacrylate, glyceryl trimethylacrylate, triallyl trimesate, cyclohexanetriol trimethylacrylate, pentaerythritol triacrylate, pentaerythritol tetraacrylate and pentaerythritol tetramethylacrylate; and
the monoene compound comprises one or more of styrene, vinylene carbonate, vinyl ethylene carbonate, methyl methacrylate, methyl acrylate, ethyl acrylate, acrylic acid, trimethylsilyl methacrylate, acrolein dimethyl acetal, acrolein diethyl acetal, 2-phenoxyethyl acrylate, 3-perfluorohexyl-2-hydroxypropyl acrylate, trifluoroethyl acrylate, trifluoroethyl methacrylate, acryl-1,3-sulfolactone, glycidyl methacrylate, acrylamide, (acryloyloxymethyl)dimethyl methoxysilane, cyanoethyl acrylate, hydroxyethyl acrylate, hydroxypropyl acrylate, 3-(perfluoro-3-methylbutyl) 2-hydroxypropyl acrylate, pentafluorophenol acrylate and acrylonitrile; and
the polymeric monomer is an ester compound, and any ester structure in the ester compound is independently methyl ester, ethyl ester, propyl ester, trifluoroethyl ester, trimethylsilyl ester, 2-phenoxyethyl ester, glycidyl ester, cyanoethyl ester, hydroxyethyl ester, hydroxypropyl ester or pentafluorophenol ester.

22. The gel electrolyte precursor solution according to any one of claims 7-21, wherein
at 45°C, the polymerization inhibitor inhibits the polymerization of the free radical polymerization system for a time of greater than or equal to 1,200 min; and
at 70°C, the initiator is capable of initiating the free radical polymerization of the free radical polymerization system within 600 min.

23. A method for preparing a secondary battery, comprising the steps of:
providing an electrode assembly located inside a case, wherein the electrode assembly comprises a plurality of electrode plates and a separator, wherein the plurality of electrode plates comprise a positive electrode plate and a negative electrode plate, and the positive electrode plate and the negative electrode plate are isolated by the separator; and any one of the electrode plates independently comprises an electrode active material layer;
injecting the gel electrolyte precursor solution according to any one of claims 7-22 into the case, and keeping the temperature at an infiltration temperature T1 to allow the gel electrolyte precursor solution to infiltrate the plurality of electrode plates;
performing formation at a formation temperature T2; and
subjecting the gel electrolyte precursor solution to a free radical polymerization reaction at a curing temperature T3 to generate a gel electrolyte, and preparing the secondary battery; wherein the gel electrolyte comprises a first gel electrolyte located inside the electrode active material layer and a second gel electrolyte located outside the plurality of electrode plates, and the first gel electrolyte and the second gel electrolyte each independently comprises a crosslinked polymer formed by the polymeric monomer, a gelling solvent, and at least a part of the electrolyte salt, and the gelling solvent comprises at least a part of the electrolyte solvent.

24. The method for preparing a secondary battery according to claim 23, which satisfies one or more of the following features:
the electrolyte salt in the gel electrolyte precursor solution comprises an electrolyte lithium salt;
the curing temperature T3 is higher than the infiltration temperature T1;
the curing temperature T3 is higher than the formation temperature T2;
the infiltration temperature T1 is 10°C-60°C;
the formation temperature T2 is 40°C-60°C;
the curing temperature T3 is 50°C-80°C;
in the step of keeping the temperature at an infiltration temperature T1 to allow the gel electrolyte precursor solution to infiltrate the plurality of electrode plates, a holding time is 24 h-48 h;
in the step of subjecting the gel electrolyte precursor solution to a free radical polymerization reaction at a curing temperature T3 to generate a gel electrolyte, a reaction time of the free radical polymerization reaction is 3 h-8 h; and
the secondary battery according to any one of claims 1-6 is prepared.

25. A secondary battery, which is the secondary battery according to any one of claims 1-6, or a secondary battery prepared by the method for preparing a secondary battery according to claim 23 or 24, wherein the secondary battery is a lithium-ion secondary battery.

26. An electrical apparatus, comprising at least one of the secondary battery according to any one of claims 1-6 and 25, and a secondary battery prepared by the method for preparing a secondary battery according to claim 23 or 24.
